## Europäisches Patentamt
## European Patent Office
## Office européen des brevets

(19)

(11) Publication number: **0 111 925**
A2

(12)

# EUROPEAN PATENT APPLICATION

(21) Application number: **83112835.0**

(22) Date of filing: **19.12.83**

(51) Int. Cl.³: **B 29 D 23/12**
B 29 C 25/00, B 29 C 27/20
B 65 D 3/00, B 65 D 55/06
B 26 D 3/16

(30) Priority: 20.12.82 US 451401
27.05.83 US 498973
27.05.83 US 498981
20.06.83 US 506018
24.08.83 US 526142

(43) Date of publication of application:
27.06.84 Bulletin 84/26

(84) Designated Contracting States:
BE CH DE FR GB IT LI NL SE

(71) Applicant: Mueller, Martin
4929 East Lake Shore Drive
Wonder Lake Illinois 60097(US)

(72) Inventor: Mueller, Martin
4929 East Lake Shore Drive
Wonder Lake Illinois 60097(US)

(74) Representative: Groening, Hans Wilhelm, Dipl.-Ing.
Siebertstrasse 4 Postfach 860 340
D-8000 München 86(DE)

(54) Spirally-wound heat-shrinkable member, method and apparatus for forming, method and apparatus for applying to containers, and method of forming a container therefrom.

(57) A method and apparatus are disclosed for very efficiently and economically manufacturing spirally-wound, heat-shrinkable cylindrical bands or members. These members can be very advantageously employed for forming tamper-evident seals on containers, and to this end an apparatus and method are disclosed for efficiently applying the members to containers. The heat-shrinkable members can also be employed for fabrication of cup-like containers, and a method of forming such containers is also disclosed.

FIG. 2

EP 0 111 925 A2

-1-

SPIRALLY-WOUND HEAT-SHRINKABLE MEMBER,
METHOD AND APPARATUS FOR FORMING, METHOD
AND APPARATUS FOR APPLYING TO CONTAINERS,
<u>AND METHOD OF FORMING A CONTAINER THEREFROM</u>

A. TAMPER-EVIDENT SEALED CONTAINER, AND
TAMPER-EVIDENT TUBE AND BANDS AND
APPARATUS AND METHOD OF MAKING AND USING SAME

<u>Background</u>

A wide variety of tamper-evident seals have been developed for sealing containers of many types. Many of them utilize relatively expensive materials, and the processes required to make them, and then to affix them to containers in their tamper-evident relationships are expensive. It is with an improved tamper-evident seal and method of making same, and with an expeditious method and apparatus for forming and applying such improved seals, with which the present invention is concerned.

Typically the materials from which one class of tamper-evident seals are made are shrinkable plastic materials, most commonly heat-shrinkable materials. Generally the object so to be sealed is a container having a closure associated with the top portion of the container which may comprise a neck and mouth thereof. Although cork-type closures in container mouths are sometimes so sealed, most such containers utilize closures which are screw-threaded or snapped over the container mouth, thereby to close the top of the container. An effective tamper-evident seal is one which embraces the closure, which envelopes a top peripheral portion of the closure, and which also grippingly embraces the portion of the container immediately below the closure, such as a neck portion of the container.

The seal should be of such a material which, when access to the container has been gained, will either have been destroyed or will not readily be reaffixable to the container, thereby to make it evident to a purchaser that the container has been opened, i.e., tampered with.

Plastic materials of different types have been used for this purpose. Indeed, seals of other materials such as lead seals, have been used, such as with wine bottles for this purpose. Usually, when plastic materials are used, tubular bands are formed and are placed over the closure and container in the zones of securance, and the bands are shrunk in place. Shrinking processes most frequently employ heat which requires that the band be shrinkable inwardly, thereby readily to grip the closure and the adjacent container portions. To facilitate shrinking, the tube must be processed to have a shrinking characteristic. Although some materials may be swollen for subsequent heat-shrinking, most commonly the band to be shrunk is formed of an oriented plastic material which, when heat is applied, will shrink primarily in the direction of orientation, i.e, in the radial direction and inwardly of the closure and container portion it is to embrace.

One of the most broadly used processes for so orienting heat-shrinkable materials is to produce sheets or strips and, during their formation, to orient such sheets or strips so that they have a substantial degree of orientation (hence heat shrinkability later) in the machine direction. Such strips or sheet materials may be printed or otherwise decorated. They are usually severed into segments of predetermined rectangular dimensions. The segments

-3-

are then formed into bands, as by overlapping and adhering marginal edges, and such a band is then applied to a container and closure, and shrunk to form a tamper-evident seal.

In such a process, the direction in which the plastic material is shrinkable is in the direction in which it was formed. If a tube were to be formed continuously in that direction, and segments of the tube removed, the resulting segments or bands would not heat shrink primarily inwardly of the container and closure, i.e., primarily radially but rather would shrink longitudinally. As such, bands formed from the formed, oriented plastic sheet material have become useful as tamper-evident seals only when segments are first cut from the sheet or strips, and the segments are then formed into tubular bands individually.

Other processes have also been used for making tamper-evident bands, but none has combined both ease of formation of the seal and ease of application of the seal in a simple, inexpensive and, when desired, continuous process.

Brief Description

In accordance with the present invention, there is provided an improved tamper-evident seal. The seal is formed from a shrinkable tubular band adapted to embrace and grip a closure and an adjacent portion of a container to which the closure is secured. The bands are made by spiral winding an elongated continuous strip of plastic material oriented and shrinkable primarily in the direction of its length to form a continuous tube, and severing spiral wound lengths from the tube to provide individual shrinkable tubular bands, each band being shrinkable primarily in the radial direction.

-4-

Desirably, the strip is wound continuously to form an endless continuous tube, from which spiral wound lengths are repeatedly severed to provide a great multiplicity of individual shrinkable bands from a single tube. The angle of intersection of the primary direction of orientation of the spiral wound tube with a plane perpendicular to the axis of the tube is preferably no more than about 35 degrees. In the preferred form, the strip is a strip of relatively brittle expanded plastic material.

To provide tamper-evident seals on an array of containers, each having a closure, the method of this invention contemplates providing a spiral wound plastic shrinkable tube formed from a strip oriented primarily in the direction of its length and shrinkable primarily in the direction of its length and being wound and joined along its edges, the tube being shrinkable primarily in the radial direction, thereafter severing a tubular length from the tube to provide a tubular band, thereafter applying the tubular band to a container to surround the closure and an adjacent portion of the container, and then shrinking the band to embrace the closure and grip the adjacent container portion. The steps are repeated continuously to seal an array of containers. Shrinking preferably comprises heat shrinking.

This invention also contemplates apparatus for providing tamper-evident seals on an array of containers, each having a closure. The apparatus includes means for providing a spiral wound plastic shrinkable tube formed from a strip oriented primarily in the direction of its length and shrinkable primarily in the direction of its length

-5-

and being wound and joined along its edges, the tube being shrinkable primarily in the radial direction, means for severing a tubular length from the tube to provide a tubular band, means for applying the tubular band to a container to surround the closure and an adjacent portion of the container, and means for shrinking said band to embrace the closure and grip the adjacent container portion. The spiral wound orientation is at an angle of no more than about 35 degrees to the central axis of the portion of the container below the closure, and in its preferred form, the seal is of a relatively brittle, expanded foam material.

The practice of the methods and apparatus of this invention are intended to produce a sealed container having an openable top closed by a closure, and sealed by a tamper-evident seal, the seal embracing the side of the closure, overlying at least a top peripheral portion of the closure and gripping a portion of the container below the closure, and in which the seal comprises a band of spiral wound plastic material which is heat shrunk in the sealing position and which remains oriented primarily in the direction of its spiral wound orientation.

Brief Description of the Drawings

FIGURE 1 is a perspective view of a typical container which has been provided with a tamper-evident seal of the present invention;

FIGURE 2 is a schematic perspective view of a machine for continuously forming, transferring and applying heat-shrinkable bands to containers to provide seals of the type shown in FIGURE 1;

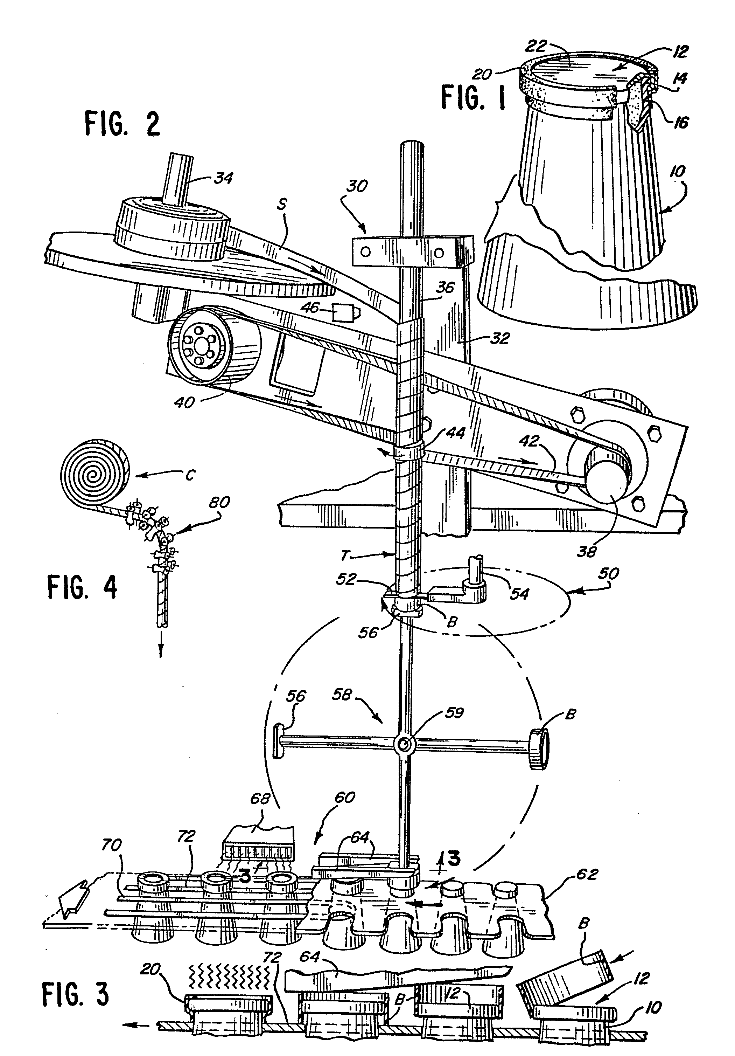

FIGURE 3 is a view taken substantially along line 3-3 of FIGURE 2 showing how the heat-shrinkable

-6-

bands may be continuously applied to containers and shrunk to produce sealed containers of FIGURE 1; and

FIGURE 4 is a view showing how a coiled, preformed spiral wound, shrinkable tube may be used to provide shrinkable bands.

Referring first to FIGURE 1, a container 10 is shown as having a closure 12. Closure 12 may be suitably secured to the container as by screw-threading or, as shown, may be snap-fitted to the container, thereby to sealingly close the container mouth 14. The container 10 terminates upwardly in a shoulder portion 16 below mouth 14 and the closure 12.

Tamper-evident seal 20 is seen to embrace the closure periphery, to overlie a marginal portion of the closure top 22 and to grippingly embrace container 10 in the zone of portion 16. The material of which seal 20 is made is so that it closely grips and embraces the closure and container such that when the closure is to be removed to gain access to the container, the seal must either be torn, cut or otherwise be removed or destroyed, or the seal, if removed intact with the closure, will be virtually impossible to re-position over the mouth 14 and container portion 16. Thus, once the closure has been removed, its reaffixation must be either without the seal or with a seal which will have been cut or torn, all of which "facts" will make it evident to a subsequent purchaser or user that someone has removed the closure and has had the opportunity to gain access to and tamper with the container contents. This, of course, is the purpose of a tamper-evident seal and the prior art is replete with seals meeting these general requirements.

-7-

Referring now to FIGURE 2, the process and machine of the present invention is shown to include a spiral winding machine 30. Machine 30 comprises support framing 32, a strip supply reel 34, a winding mandrel 36, a motor driven winding drum 38, an idler drum 40, and a winding belt 42. As seen, as the winding belt 42 is driven in the direction shown, its wrapped section 44 drives the spiral tube T around the mandrel 36, and may both uncoil the elongated continuous plastic strip S to continue the formation of the continuous spiral wound tube T, and to drive the tube T downwardly. The spiral winding machine 30 may be of a generally conventional type known for use in forming toilet paper rolls, frozen juice cans, and a host of other spirally wound tubular products presently available for domestic and industrial uses.

In accordance with the preferred embodiment of this invention, the strip S is formed from a web of polystyrene foam or expanded polystyrene material having a thickness of from about .002 inch to about .004 inch, it being desired to use the thinnest possible material for speed of shrinkage and economy.

While, as noted above, it is preferred to use relatively thin gauge material, the present invention also contemplates that substantially thicker materials can be used in the range, for example, of from about .020 inch to about .040 inch. Such thicker materials may have a density on the order of 10 to 30 pounds per cubic foot, and while heat-shrinkable expanded polystyrene is a preferred material, other heat-shrinkable expanded thermoplastic materials, such as polypropylene, polyethylene, and polyvinyl chloride are also appropriate for use in the present invention.

-8-

When used as a tamper-evident seal, the material is relatively brittle, and fragile, so that when it is bent, it breaks, and when efforts to remove it, as with fingernails, are attempted it is fractured at the point of attack to provide visual evidence of tampering. The strip S may be about one inch wide and may have a substantial degree of orientation and shrinkability in the longitudinal direction of the strip.

The strip is oriented primarily in the direction of its length and is therefore shrinkable primarily in that direction. It is not necessary that there be shrinkability in the other direction (perpendicular to the machine direction), but some shrinkability in that direction is permissible.

The strip S may be printed with textual or decorative material, or both, and in a pattern which will compensate, after shrinking, for the shrinking to provide the desired image and proportioning of text and design, all as is known and understood in the art. The strip S may also be joined or laminated with other materials to provide suitable decorative or functional finishes, the only requirement being that such other materials not interfere with the shrinking and sealing of the strip S.

As the longitudinally oriented strip is uncoiled and drawn from supply reel 34, it passes an adhesive applying station 46. The adhesive is applied, as by spray heads in a known manner, to the marginal edge of the strip so that when the strip is wound, as by overlapping, with the preceeding turn of the strip on the mandrel, the adhesive will cause the overlapped portions to adhere, thus to form the integrated continuous tube T. Although adhesive may be used to integrate the tube, depending upon the plastic of which strip S is formed and its
properties, solvents may be used to facilitate
bonding. Under properly controlled circumstances,
heat softening may also be utilized to bond
overlapped portions of the strip, thereby to form a
integrated tube T which is shrinkable primarily in
the radial direction.

Preferably, the overlap is as little as
reasonably possible. With the polystyrene material
described, an overlap of as little as 1/16" may be
used, although an overlap of about 1/8 inch, 3/16
inch or even slightly more may be used as well.

As stated, belt 42 drives the tube T
continuously downwardly. The width of the belt 42 is
preferably slightly less than the width of the strip
S. As the tube T grows in length, i.e., moves
downwardly, it reaches a severing and transferring
station 50 at which lengths comprising individual
tubular bands B are continuously severed therefrom by
a suitable cutter, such as a knife 52 mounted for
rotation about shaft 54. Although the cutter is
shown as operating externally of the tube T, internal
cutters may be used as well. Because tube T is
heat-shrinkable primarily in the radial direction,
each band B is also heat-shrinkable primarily
radially. Substantially simultaneously with its
severance from tube T, band B may be seated on a
transfer applicator 56 which is mounted on a
rotatable transfer turret 58. Turret 58 then carries
bands B about shaft 59 to the sealing station 60.

Filled containers 10 having associated
affixed closures 12 are continuously supplied to
sealing station 60. For that purpose container
carriers 62, which are configured suitably for the
particular containers, convey and guide suitably filled containers to the supply station. Of course appropriate closures are in place on the containers. As each container enters the sealing station (as shown by FIGURES 2 and 3), a transfer applicator carrying a band B moves synchronously to engage a band B with a container 10, for example, by bringing the leading edge of the band B into engagement with the leading edge of the container closure (see FIGURE 3). Camming guides 64 then engage a band B in zones adjacent the side edges of the transfer applicator 56, and cam and guide the band B downwardly, both out of engagement with the transfer applicator 56 and to the appropriate, pre-determined elevation relative to the container and closure. Of course, the band is preferably only slightly larger in diameter than the external diameter of the closure so that it will remain at the selected elevation. If it will not, suitable elevation maintainance guides or stops may be provided in association with the container carriers or otherwise.

As the containers with bands B continue to move (to the left), a source of heat, such as heat tubes 68, direct heat against the bands B. Because the molecular orientation of the bands is such that the bands will shrink in the longitudinal direction of the original strip (radially of the formed bands B), they quickly shrink about the closure to embrace and grip the closure, thereby also to overlie a peripheral portion of the top of the closure 12 and to grip the portion 16 of the container 12 immediately below the closure, all as illustrated in FIGURE 3. Preferably the containers 10 are rotated as the heat is applied. That may be facilitated by providing a driven belt 70 which engages the containers and which biases it against a guide bar 72.

-11-

While bands B have been illustrated and described as embracing only the peripheral portion of the closure 12, the present invention also contemplates that the entire top surface of the closure may be covered. With such an arrangement, the band will have an axial dimension greater than that illustrated in FIGURE 3, so that upon heating the top edge of the band will shrink together to form a continuum of thermoplastic material. If it is desired to have a completely smooth thermoplastic layer, a heated platen having a flat surface may be applied to the thermoplastic continuum to smooth out any wrinkles therein.

Carriers 62, as shown, are capable of carrying a double row of containers through the sealing station. Tandem forming, winding, transferring and applying mechanisms thus may be used if desired.

It will be apparent to those skilled in the art that the particular mechanisms disclosed may be varied substantially. As such, the specific winding machine, disclosed the severing device, the band transfer mechanism, and the means for applying the transferred bands to the containers (as well as the type of shrinking mechanism, which could be resistance heating rods or the like) are not in and of themselves individually critical to the practice of the present invention. They do, in combination, however make it possible continuously and easily to form heat-shrinkable bands which may be continuously applied to containers, all at minimum expense compared especially to seals of like material which are individually formed from individual rectangular blanks of material.

-12-

The dimensions of the bands will, of course, vary with the container and closure to be sealed. Thus, bands B can be formed in diameters as small as 1/2 or 3/4 inch, and as large as six inches or more. For most medical applications (such as for bottles of capsules) they will range from one-half to less than two inches in diameter. For food applications, they may range from about one to two inches, although in some food applications the diameters can run as much as six inches or more.

It is, of course, important that the direction of orientation of the strip S be significantly retained in the tube T and severed bands B. Thus, the width of a strip S should be such that when it is wound upon the mandrel, the machine direction (the direction in which the strip has been primarily oriented), should be at an angle of no more than about 35° to a plane perpendicular to the axis of the tube T.

That is to say that the strip S is wound such that the angle of intersection of the primary direction of orientation of the strip (which is usually parallel to the edge of the strip) with a plane perpendicular to the axis of the tube is no more than about 35 degrees. Thus, the smaller the diameter of the band to be formed, the narrower the strip S which may permissibly be used. The greater the diameter of the band to be formed, the greater the permissible width of the strip S. However, if the strip is provided with some degree of heat-shrinkability in the direction perpendicular to the machine direction, i.e., is partially biaxially oriented, the angle at which the strip S is inclined may be increased somewhat.

-13-

Thus, generally speaking, for band diameters substantially less than one inch in diameter, strips S of about one inch should be used to form the tube T. For bands of from about one inch to one and one-half inches in diameter, strip widths of about one inch to 1-1/2 inches are most desirable, and for band diameters in excess of 1-1/2 inches, strip widths of 2 inches or more will be most desirable. Of course, the formation of the tube will most inexpensively proceed with wider strips. However, for the reasons stated, this must be balanced with the needed shrink characteristics of the tubular bands severed from the continuously formed tube.

Although, as shown, it is most desirable to form the spiral tube continuously to provide a great multiplicity of individual shrinkable bands in conjunction with the operation of the filling and closure applying machines (not shown) from which the containers are conveyed by the container carriers to the sealing station, it is also within the purview of the present invention to form the spiral tube in another location, from which it is then brought to be severed into bands to be applied in synchronism with the presentation of containers to be sealed.

As such, it is contemplated by this invention also that a spiral wound tube T may be flattened and wound into a flattened coil C, with the coil C then being transported to the sealing machine with which it is to be used. The coil C is then cammed open (see Fig. 4), and may then be fed to a cutter and otherwise follow the same path as the bands formed, transferred and applied in the manner above described. As seen in FIGURE 4, a coil of flattened spiral wound tube T, is cammed open by a cam means 80, following which it is ready to be

-14-

presented to a knife 52 to be severed, and thence be transferred and used as described in connection with the embodiment of FIGURES 2 and 3.

Of course, whether a coil C is used, or the continuously formed tube T of FIGURES 2 and 3 is used, each will produce hundreds of tubular bands, each of which is at least 1/4 inch in length. Continuous formation of the spiral wound tube T can produce tens of thousands of bands or more.

When polystyrene foam of the type described is used, because it tends towards brittleness, if it is to be flattened and then opened, it may be desirable to heat the tube T slightly in the zones in which the folds or creases are to be formed, thereby to assist in folding without cracking. Slight heating may be also be of advantage to assist in reopening the tube from its flattened coiled form. The heat level, however, should be controlled to minimize initiating of the shrinking of the coiled tube T.

The formation of the spiral wound heat-shrinkable tubes to provide shrinkable bands may be with materials other than the relatively brittle expanded polystyrene material described above. Thus other heat shrinkable expanded thermoplastic materials can be employed, including polypropylene, polyethylene and polyvinyl chloride which may be formed by conventional forming and orienting procedures into strips which are oriented to be shrunk in the direction of the length of the strip. Brittle material is preferred for anti-tampering purposes. Non-expanded, oriented plastic strips may be used as well in the practice of the present invention, and typical oriented, non-expanded,

-15-

plastic materials include polyethylene, polypropylene and other known orientable materials.

The continuously formed spiral tube can provide thousands and tens of thousands of bands continuously and without the individual formation required for such bands in prior art machines. The strip S from which the tube is formed may be joined, as one coil comes to an end, with a strip of another coil so that the tube T may be formed for many hours and even days in one continuous length, from which bands are severed. When coils of tubes T are formed for use, the coil may produce tens of thousands of bands (hence seals), again without individual band formation and the expensive forming equipment required in prior art operations.

It will be apparent to those skilled in the art that modifications in the specific embodiments described may be made without departing from the spirit and scope of this invention. Accordingly, I do not intend to be limited to the embodiments described except insofar as may be made necessary by the appended claims.

B.  METHOD AND APPARATUS FOR PREFORMING AND APPLYING A HEAT-SHRINKABLE MEMBER TO A CONTAINER
### Background

While generally cylindrical heat-shrinkable members are suitable for application to many types of containers, their application to some types of containers can be problematical. The configuration of some containers is such that heat-shrinking application of cylindrical tamper bands thereto must be very carefully controlled to assure uniform shrinkage of the bands so that they properly embrace the containers. However, since tamper band

-16-

application is preferably performed attendant to high speed packaging of products, it is frequently impractical or impossible to sufficiently control and monitor tamper band application to assure the desired interaction of the bands with their associated containers. Thus, it is desirable to provide a method of applying heat-shrinkable tamper bands or like members to containers so that it is possible to better control the heat-shrinking of the members into a configuration which will conform to the configuration of the containers to which the members are applied.

Another problem encountered with heat-shrink fitment of tamper bands or like members to containers relates to the manner in which they are heat-shrunk. After the members have been positioned in association with the containers, the members are shrunk by the application of heat, which is typically accomplished by passing the containers through a heat tunnel or like heat source so that the heat-shrinkable members are substantially entirely heated and shrunk into conformance with the containers.

While the above-described application technique is acceptable for applying heat-shrinkable members to many types of products, the use of this technique with some products and some containers is not acceptable. Specifically, some products are adversely affected when subjected to the heat of a heat tunnel or like heat source provided for shrinking the heat-shrinkable members into conformance with their associated containers. For example, a product such as frozen dessert topping can be unacceptably discolored when excessively heated. Even though such products may be maintained in a frozen state until just prior to application of

-17-

heat-shrinkable members thereto, applying sufficient heat to the entire heat-shrinkable member for it to shrink into conformance with the product container can still result in the unacceptable discoloration or other adulteration of the product. Similarly, some types of containers cannot withstand the heat required to effect shrinkage of the heat-shrinkable members into that desired conformance with the containers.

Accordingly, it is highly desirable to provide a technique by which a heat-shrinkable member can be applied and conformed to an associated container with minimal heating of the container and its contents.

Brief Description

In accordance with the present invention, a method and apparatus are disclosed for preforming heat-shrinkable members, and subsequently applying the members to associated containers such that the members are conformed to the configuration of the containers. The method of the present invention contemplates that a preferably generally cylindrical heat-shrinkable member is first partially heat-shrunk to form a preformed member which may at least partially conform to the configuration of the container to which the member is subsequently applied. The preformed member is then applied to the container and further conformed thereto. While this final application can be achieved by passage of the container through a heat tunnel or the like, the present invention contemplates that only a portion of the preformed member is locally heated, thus minimizing heating of the associated container and its contents.

-18-

While the present invention is particularly suited for applying heat-shrinkable, tamper-indicating members to associated containers, it will be recognized that the invention is readily adaptable for other applications wherein it is desirable to initially partially form a heat-shrinkable member, and thereafter complete formation of the member while it is positioned in association with a container or the like to which it is being applied. By this technique, heretofore unachievable control of the shrinking process is obtained, since the heat-shrinkable members can be partially pre-shrunk to a pre-selected form apart from their final application to containers.

In the preferred practice of the present invention, the heat-shrinkable members to be preformed and applied to containers are in a generally cylindrical form, with the members predominantly shrinkable in a radial direction. The heat-shrinkable member is first preformed to a configuration which may at least partially conform to the configuration of the container to which the member is to be applied. Preforming in this manner is accomplished by providing a preforming mandrel. The heat-shrinkable member is positioned in association with the preforming mandrel, and the member is then heated. This causes the member to shrink and conform to the configuration of the preforming mandrel, thus forming a preformed member of the pre-selected configuration.

Since preforming is effected apart from application of the heat-shrinkable member to a container, the preforming can desirably be carefully controlled. Further control of the performing method is provided by releasably retaining an annular edge portion of the heat-shrinkable member as it is heated for conformance to the performing mandrel. Releasable retention in this manner acts to assure the uniformity of the resultant preformed member.

After the preformed member has been moved from association with the preforming mandrel, the preformed member is positioned in association with the container to which it is being applied. Notably, the preformed member can then be applied to the associated container by locally heating only a portion of the preformed member. The localized heating of the preformed member is preferably performed so as to minimize any heating of the associated container and its contents. However, if product and/or container heating need not be avoided, final application can also be effected by heating of the entire preformed member, such as by a passage through at heat tunnel.

In order to minimize the time required for further conforming the preformed member to the configuration of the container, engagement means can be provided for moving a portion of the preformed member into conformance with the container, such as the locally heated portion of the member. In the illustrated embodiment, the engagement means are provided by an engagement roller which is adapted to engage a portion of the preformed member by rotation of the container and the preformed member with respect to the engagement roller. By this technique, the preformed member is very quickly further conformed to the configuration of the container while heating of the container and its contents is avoided. Application of the heat-shrinkable member to the container is then complete.

-20-

## Brief Description of the Drawings

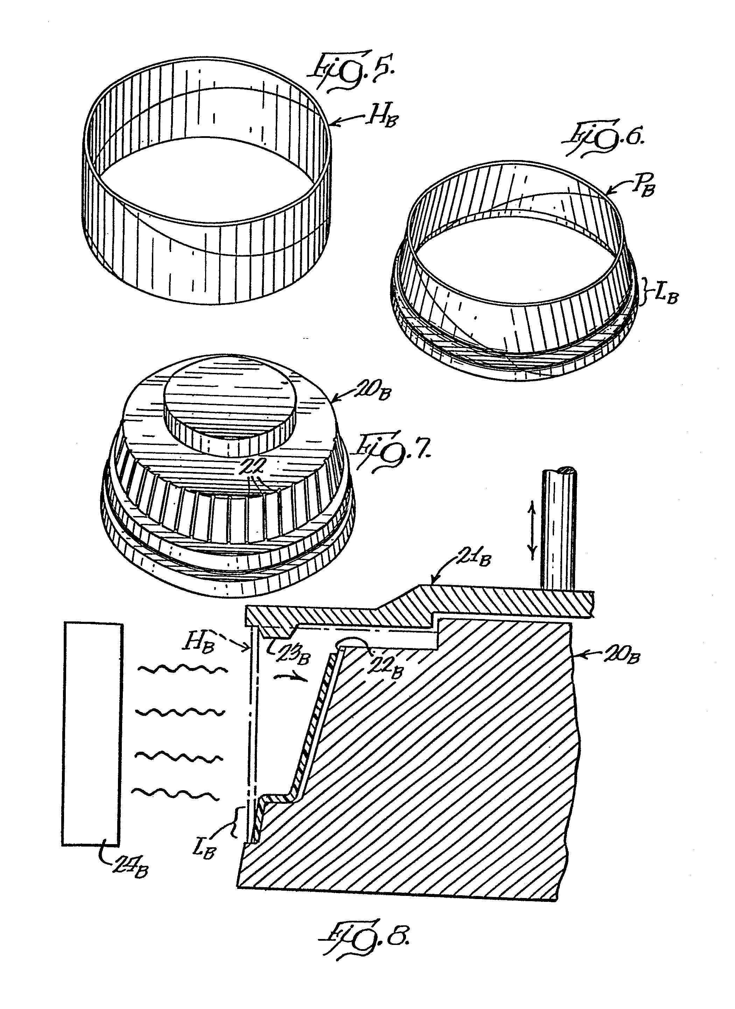

FIGURE 5 is a perspective view of a generally cylindrical, heat-shrinkable member to be preformed and applied to an associated container in accordance with the present invention;

FIGURE 6 is a perspective view of a heat-shrinkable preformed member formed from the heat-shrinkable member of FIGURE 5;

FIGURE 7 is a perspective view of a preforming mandrel for forming the heat-shrinkable member of FIGURE 5 into the preformed member of FIGURE 6;

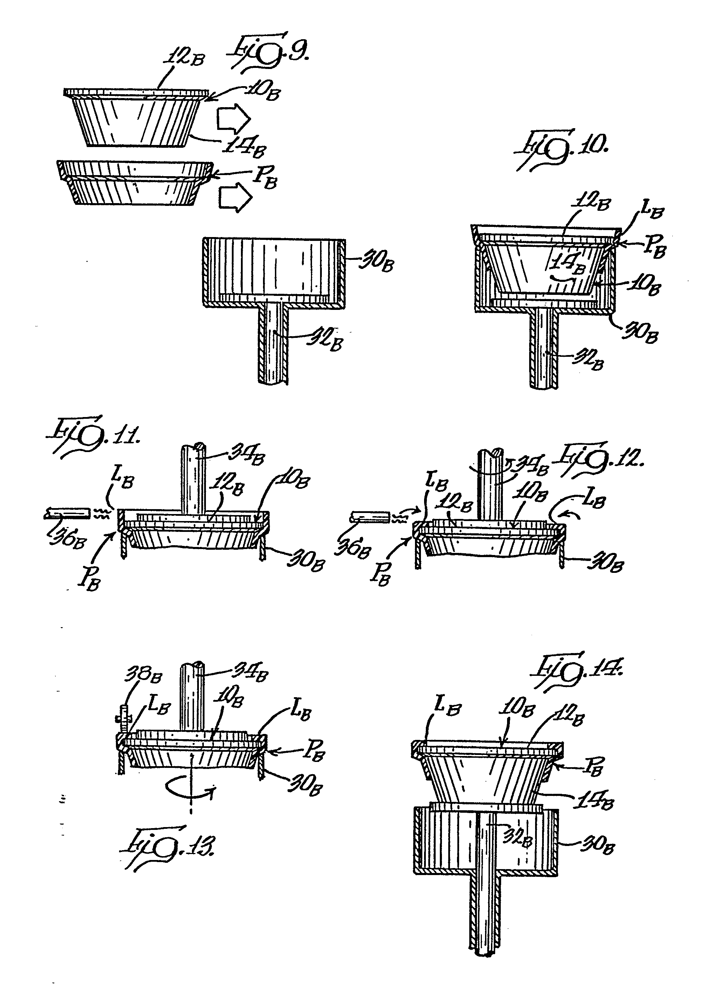

FIGURE 8 is a diagrammatic view illustrating preforming of the preformed member of FIGURE 6 by use of the preforming mandrel illustrated in FIGURE 7; and

FIGURE 9-14 are diagrammatic views illustrating the steps of applying the preformed member illustrated in FIGURE 6 to an associated container.

## Detailed Description

FIGURE 5 illustrates a generally cylindrical, heat-shrinkable member $H_B$ to be preformed and subsequently applied to an associated container. As will be noted from FIGURE 5, member $H_B$ is illustrated as spirally wound, formed in accordance the teachings of copending U.S. patent application 451,401, filed December 20, 1982. As will be recognized, the present invention is readily adaptable for use in association with heat-shrinkable members formed other than in accordance with .the above copending application. The member $H_B$ is preferably formed from a heat-shrinkable thermoplastic material, such as expanded polystyrene, polypropylene, polyethylene, or polyvinyl chloride. When the member $H_B$ is generally cylindrical as illustrated, it is preferably. configured so as to be predominantly heat-shrinkable in a radial direction relative to its axis.

The heat-shrinkable member $H_B$ is adapted to be applied to container $10_B$, illustrated in FIGURE 9. Container $10_B$ is intended to be illustrative of a typical container construction, since it will be appreciated that the present invention can be readily practiced for applying heat-shrinkable members to containers of almost an endless variety of configurations. The container $10_B$ includes a lid portion $12_B$, and a bottom portion $14_B$ which is generally downwardly inwardly tapering.

The present invention contemplates the preforming and subsequent application of heat-shrinkable member $H_B$ to container $10_B$ so that attempted opening or opening of the container by removal of its lid portion $12_B$ requires permanent visible deformation of the heat-shrinkable member for tamper-indicating. However, the invention can also be employed for application of other than tamper-indicating members, such as protective sleeves that are sometimes fitted to containers.

In this regard, the present invention can be employed for forming and applying a combination protective sleeve/tamper band, which may also provide a label for the associated container. Notably, the provision of a protective sleeve or the like on a container desirably acts to rigidity the container itself, thus permitting the container to be made from relatively lighter gauge material for desired economy in fabrication of the container. Further, application of heat-shrinkable members to provide labels for containers desirably permits the use of a

-22-

single type or color of container for diffeent varieties of a product, with appropriately different heat-shrinkable labels applied to the like containers to identify the different varieties of the product.

FIGURE 6 illustrates a heat-shrinkable preformed member $P_B$ formed from the member $H_B$ of FIGURE 5 in accordance with the present invention. As will be noted, preformed member $P_B$ has a configuration which is at least partially conforming to the configuration of container $10_B$ to which it will be applied. The formation of preformed member $P_B$ from member $H_B$ is effected by use of a preforming mandrel $20_B$, illustrated in FIGURE 7.

Preforming mandrel $20_B$ is partially configured like the container $10_B$, more specifically, the mandrel $20_B$ has a generally inwardly tapering configuration like the inwardly tapering configuration of the bottom portion $14_B$ of container $10_B$. Ordinarily, the preforming mandrel will be at least partially generally configured like the container to which the preformed member $P_B$ is to be applied, but the configuration of the preforming mandrel is selected to form member $P_B$ to the desired configuration which facilitates subsequent application of member $P_B$ to a container, and thus the mandrel $20_B$ is not necessarily configured like the container.

FIGURE 8 diagrammatically illustrates the formation of preformed member $P_B$ from heat-shrinkable member $H_B$ by the use of preforming mandrel $20_B$ and a retaining member $21_B$. As shown in this figure, the heat-shrinkable member $H_B$ is positioned in association with preforming mandrel $20_B$ such that the member $H_B$ extends generally about the preforming mandrel. Thereafter, retaining member $21_B$ and preforming mandrel $20_B$ are relatively moved so that a preferably continuous retaining lip portion $23_B$ of the retaining member is positioned in association with the annular edge portion of the member $H_B$ generally adjacent and inwardly of the annular edge portion.

Significantly, retaining member $21_B$ acts to releasably retain the edge portion of member $H_B$ during heating of the member $H_B$ to facilitate formation of preformed member $P_B$. By this retention, a progressive shrinking action is provided. Since the lower portion of the member $H_B$ is in relatively closer association with preforming mandrel $20_B$ when heat-shrinking is initiated, that portion requires a somewhat greater heat input to shrink into the desired conformance with mandrel $20_B$. In contrast, the free upper portion of member $H_B$, which is spaced further from mandrel $20_B$, would begin to shrink relatively quickly if not releasably retained, and thus fold over or otherwise shrink in an unintended manner. Accordingly, the retaining member $21_B$ releasably retains the upper edge portion of member $H_B$ during heat-shrinking, thus allowing sufficient time for the remainder of the member $H_B$ to move toward conformance with mandrel $20_B$. Subsequently, the upper edge portion of member $H_B$ slips off of lip portion $23_B$ of retaining member $21_B$ to complete formation of preformed member $P_B$ of the desired uniformity.

After member $H_B$ has been positioned in association with retaining member $21_B$ and preforming mandrel $20_B$ as illustrated, the entire member $H_B$ is subjected to heat causing it to shrink inwardly and conform to preforming mandrel $20_B$ so that preformed member $P_B$ is formed. In this

-24-

regard, the preforming mandrel $20_B$ is preferably configured to accommodate the passage of air from between the preforming mandrel and the heat-shrinkable member $H_B$ as the member $H_B$ shrinks onto the preforming mandrel. In the illustrated embodiment, preforming mandrel $20_B$ defines a plurality of vent passages $22_B$ to prevent build-up of air between the preforming mandrel $20_B$ and the heat-shrinkable member $H_B$ which could otherwise form air bubbles or like irregularities in the resultant preformed member $P_B$. Suction means applied through vent holes defined by preforming mandrel $20_B$ can also be employed to prevent undesired irregularities.

The heat for shrinking heat-shrinkable member $H_B$ to form preformed member $P_B$ is provided from a suitable heat source designated $24_B$. This heat source may comprise a heat tunnel or oven within which the preforming mandrel $20_B$ and the heat-shrinkable member $H_B$ are positioned, or may comprise a heat source which acts directly against only a portion of heat-shrinkable member $H_B$, with rotation of preforming mandrel $20_B$ and retaining member $21_B$ together with heat-shrinkable member $H_B$ assuring the complete heating of member $H_B$ so that preformed member $P_B$ is formed.

To facilitate subsequent application of preformed member $P_B$ to container $10_B$, the preformed member is preferably formed to be slightly larger than the container. This can be achieved by sizing preforming mandrel $20_B$ to be slightly larger than the portion of the container to which the member $P_B$ is to be applied, or by controlling the preforming heat-shrinking of member $H_B$ so that it does not conform too tightly to the preforming mandrel.

After the preformed member $P_B$ has cooled sufficiently to permit it to be handled without undesired deformation, the member $P_B$ is moved out of association with preforming mandrel $20_B$, and is ready for application to container $10_B$. FIGURES 9-14 diagrammatically illustrate application of preformed member $P_B$ to container $10_B$ so that the preformed member is further conformed to the configuration of container $10_B$. When the member $P_B$ is to be applied to container $10_B$ for tamper-indication, the member $P_B$ is conformed to the container such that opening of the container by removal of its lid portion $12_B$ results in permanent, visual deformation of the preformed member $P_B$.

FIGURES 9 and 10 illustrate movement of container $10_B$ and preformed member $P_B$ into association with each other and into association with the portion of the apparatus of the present invention for applying the preformed member $P_B$ to the container $10_B$. To this end, the apparatus can include a supporting member $30_B$ adapted to receive the preformed member $P_B$ and the container $10_B$, as illustrated in FIGURE 10. Supporting member $30_B$ may comprise one of a plurality of such supporting members provided on a rotary, turret-type packaging machine adapted for sequential, high speed application of preformed members such as $P_B$ to respective associated containers such as $10_B$. When positioned in association with container $10_B$ as illustrated in FIGURE 10, the member $P_B$ conforms to the portion of the container which generally provided the profile of preforming mandrel $20_B$. If desired,

-26-

the apparatus may include an ejector member $32_B$ which is vertically movable with respect to supporting member $30_B$ to facilitate ejection of container $10_B$ and its heat-shrinkable member $P_B$ after application of member $P_B$ is complete.

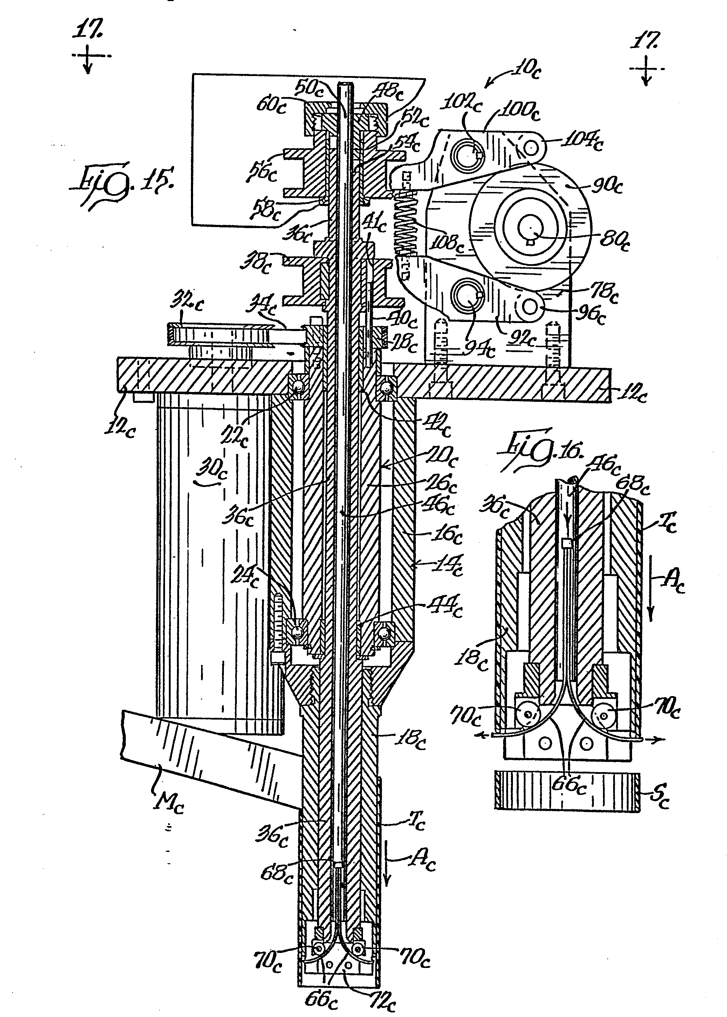

Referring now to FIGURE 11, the present apparatus may include a rotating drive member $34_B$ which is positioned atop lid $12_B$ of container $10_B$ by relatively vertically moving the member $34_B$ and the container $10_B$. The preformed member $P_B$ is now ready to be further heated so that it further shrinks and conforms to container $10_B$, specifically so that the preformed member $P_B$ overlies a portion of the lid portion $12_B$ of the container.

While passage of container $10_B$ through a heat-tunnel or the like may be suitable for final application of the preformed member $P_B$ in some instances, heating of container $10_B$ and its contents is avoided by localized heating of a portion of the preformed member. Localized heat source $36_B$ is provided for this purpose. Heat source $36_B$ may comprise a nozzle or the like for directing a heated air stream against a portion $L_B$ of preformed member $P_B$ which is to be locally heated. To minimize the heating of container $10_B$ and its contents, the heat source $36_B$ is preferably configured to minimize the impingement of heat energy on other than locally heated portion $L_B$. Accordingly, the locally heated portion of the preformed member $P_B$ in the illustrated embodiment comprises the portion of the member $P_B$ opposite from its inwardly-most tapered portion. It should be further noted that in the illustrated embodiment the configuration of supporting member $30_B$, which receives substantially the entire container $10_B$, and the configuration of

-27-

rotating drive member $34_B$, which substantially covers the entire lid portion $12_B$ of the container, further act to minimize the heating of container $10_B$ by localized heat source $36_B$.

In order to locally heat the entire upper annular edge portion $L_B$ of preformed member $P_B$, the container $10_B$ and preformed member $P_B$ are preferably rotated with respect to heat source $36_B$, as illustrated in FIGURE 12. Rotation in this manner can be effected by rotation of rotary drive member $34_B$ and/or by rotation of supporting member $30_B$. As the container and the preformed member $P_B$ are rotated, all of the locally heated portion $L_B$ of member $P_B$ is heated so that it shrinks and thereafter conforms to configuration of container $10_B$, specifically by moving into overlying relation with the cover $12_B$ of container $10_B$.

To assure conformance of member $P_B$ to container $10_B$ in the intended manner, such as for tamper-indication, and to effect conformance in an efficient manner, means are preferably provided for moving the locally heated portion $L_B$ of preformed member $P_B$ into association with container $10_B$. This is illustrated in FIGURE 13 wherein an engagement roller $38_B$ is provided for positively engaging locally heated portion $L_B$ of preformed member $P_B$ such that as the container and the preformed member are rotated, engagement roller $38_B$ rollingly engages the locally heated portion of the preformed member. Such moving of locally heated portion $L_B$ with engagement roller $38_B$ can be performed in conjunction with the local heating of portion $L_B$ with localized heat source $36_B$, or may be performed just after the localized heating of portion $L_B$ while portion $L_B$ is still sufficiently pliable.

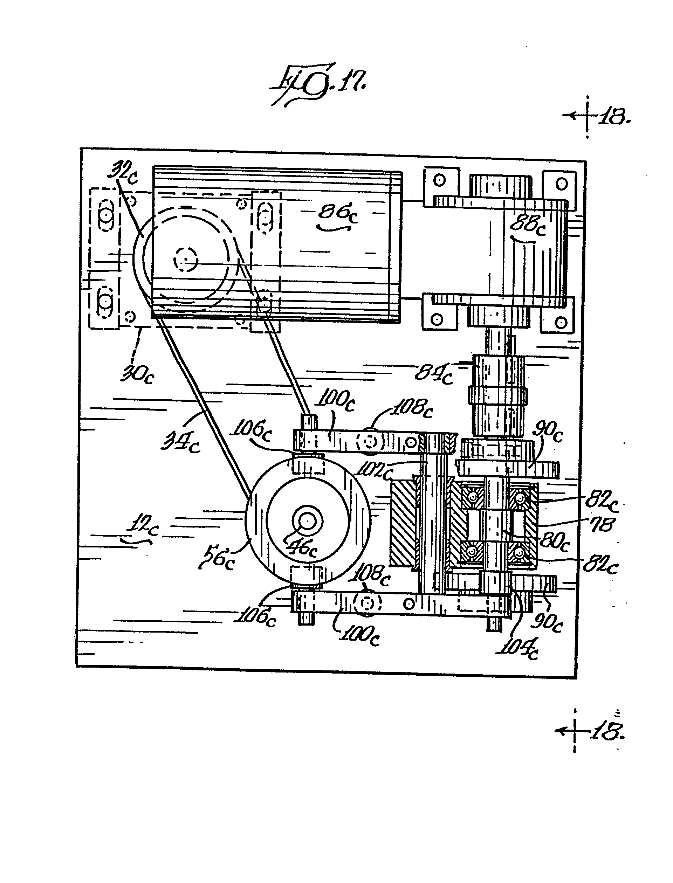

FIGURE 14 illustrates the completed application of preformed member $P_B$ to container $10_B$ after the locally heated portion $L_B$ of preformed member $P_B$ has been moved to its final position in association with the container. The container $10_B$ can then be ejected from supporting member $30_B$ such as by relative vertical movement of the supporting member $30_B$ with respect to ejector member $32_B$. The container $10_B$ can then be moved from the apparatus for subsequent packaging, storage, and shipment.

C.   METHOD AND APPARATUS FOR
     <u>INTERNALLY CUTTING A TUBE OF MATERIAL</u>

This aspect of the present invention relates to a method and apparatus for cutting individual tube segments in a highly efficient matter, preferably in conjunction with formation of a spirally wound tube of material. While past arrangements for cutting tubular material have typically operated to cut the material from its outer surface, the present invention uniquely functions to internally cut the tube of material into segments.

<u>Brief Description</u>

The present method and apparatus permit highly efficient formation of tubular segments from a tube of material by internally cutting the tube of material, preferably in conjunction with formation of the tube of material by spirally winding a generally continuous strip of the material. The apparatus disclosed is desirably relatively compact, and is particularly adapted to be integrated with an apparatus for forming a spirally wound tube of material, thus facilitating cutting of the tube into segments of any desired length as the tube is formed. When practiced in accordance with the present disclosure, the invention facilitates very high speed formation of individual tube segments, thus promoting their economical manufacture. When the present invention is used for formation of heat-shrinkable tamper bands in accordance with the above-referenced copending patent application, the resultant bands can be very inexpensively manufactured, yet are highly effective for visually indicating opening of associated containers to which the bands are affixed.

The apparatus of the present invention includes a frame which supports a generally cylindrical forming mandrel upon which the tube of material to be cut is carried, with the tube being adapted to be relatively advanced along the mandrel toward a free end thereof. In the preferred embodiment of the invention, the mandrel provides the structure upon which the tube of material may be continuously spirally wound, with formation of the tube in this manner acting to advance the tube along the mandrel of the apparatus in the desired fashion.

The apparatus of the present invention further includes a rotary cutter assembly rotatably mounted in the forming mandrel for rotation about an axis coinciding with the centerline or longitudinal axis of the mandrel. A cutter drive arrangement is provided for continuously rotating the cutter assembly within the mandrel, with the cutter assembly including one or more cutting blades which are adapted to reciprocably move outwardly and inwardly of the mandrel at the free end thereof. By this arrangement, the one or more cutting blades act to intermittently internally cut and sever the tube of material when the blades are moved outwardly of the mandrel, and thus form tubular segments from the continuous tube of material.

An important feature of the present invention is its adaptability for very high speed formation of tubular segments. To this end, the apparatus of the present invention is uniquely configured to operate such that the cutting blades of the cutter assembly move axially of the forming mandrel in the direction of advancement of the tube of material on the mandrel during cutting of the tube. By operation in this manner, each cut formed in the tube of material is circular and extends in a plane which is substantially perpendicular to the axis of the tube of material. The result is formation of tube segments which are substantially cylindrical. When the present invention is used for formation of heat-shrinkable tube segments, their substantially cylindrical configuration facilitates subsequent heat-shrink fitment to associated containers.

In order to operate in the above preferred manner, the cutter assembly of the present apparatus includes a cutter arbor which extends concentrically within the forming mandrel, and a blade actuating rod which extends concentrically within the cutter arbor. The cutter drive of the apparatus is adapted to rotatably drive the cutter arbor and the blade actuating rod together within the forming mandrel of the apparatus. While the blade actuating rod and cutter arbor are adapted to be rotatably driven together, the arbor and actuating rod are adapted for relative axial movement with respect to each other, as well as with respect to the forming mandrel.

-31-

The one or more cutting blades of the apparatus are operatively connected with the blade actuating rod of the cutter assembly so that reciprocable, relative axial movement between the cutter arbor and the actuating rod acts to reciprocably move the cutting portion(s) of the one or more cutting blades inwardly and outwardly of the forming mandrel at its free end. This relative axial movement is effected by means of a cam mechanism which operates to axially move the cutter arbor and blade actuating rod with respect to each other, as well as with respect to the forming mandrel. An arrangement of flanged couplings and cam links operatively interconnects a timing cam arrangement with the blade actuating rod and the cutter arbor to permit their axial movement as they rotate within the forming mandrel.

In the preferred mode of operation, the cam mechanism operates to first relatively axially move the cutter arbor and blade actuating rod to move the one or more cutting blades of the cutter assembly outwardly of the forming mandrel. The cam mechanism further operates to axially move the actuating rod and cutter arbor together within the forming mandrel in the direction of tube advancement so that the cutting blades of the apparatus move in the direction of tube advancement during internal cutting of the tube.

## Brief Description of the Drawings

FIGURE 15 is a side elevational view in partial cross-section and cutaway illustrating an apparatus for internally cutting a tube into segments embodying the principles of the present invention;

FIGURE 16 is an enlarged, fragmentary view of the portion of the apparatus illustrated in FIGURE

-32-

15 at which internal cutting of the associated tube of material is effected;

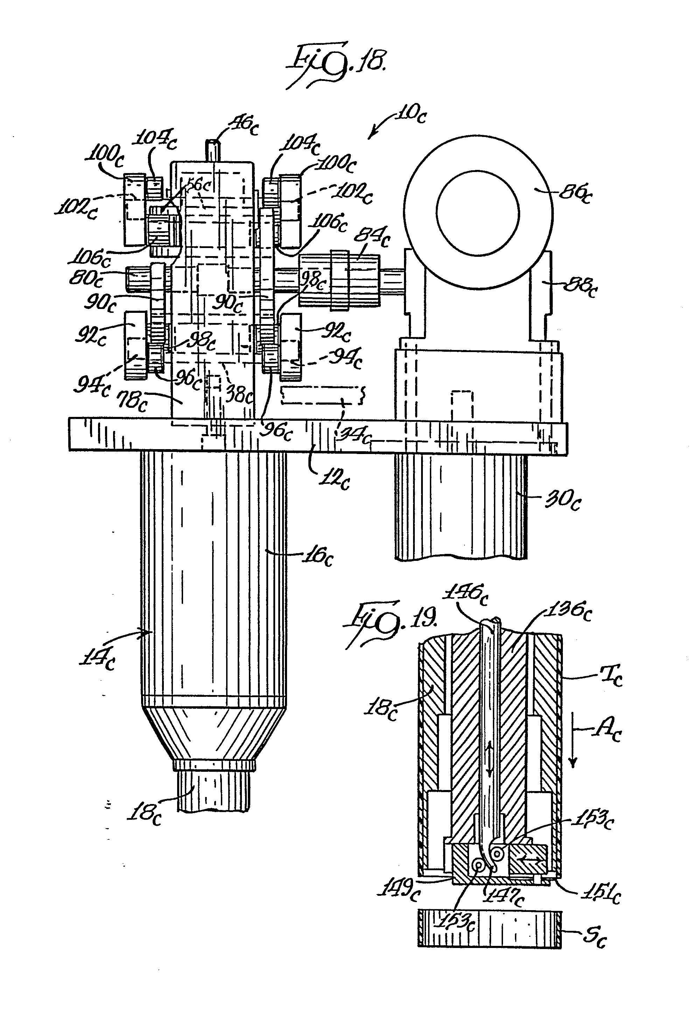

FIGURE 17 is a top plan view in partial cross-section and cutaway of the apparatus illustrated in FIGURE 15 taken generally along lines 17-17 in FIGURE 15;

FIGURE 18 is a partial side elevational view in partial cutaway of the apparatus illustrated in FIGURE 15 taken generally along lines 18-18 of FIGURE 17; and

FIGURE 19 is a view similar to FIGURE 16 illustrating an alternate construction for a portion of the cutter assembly of the present apparatus.

## Detailed Description

Referring now to FIGURE 15, therein is illustrated a tube cutting apparatus $10_C$ embodying the principles of the present invention. While the apparatus $10_C$ is illustrated in a general vertical orientation, it will be recognized that the apparatus can be readily otherwise positioned for operation. Accordingly, terms such as upper and lower used in this disclosure will be understood as referring to the apparatus in its illustrated orientation, and will be further understood as not suggesting that the present apparatus cannot be oriented other than generally vertically.

Apparatus $10_C$ includes a frame $12_C$ from which depends a mandrel assembly, generally designated $14_C$. The mandrel assembly includes an upper mandrel portion $16_C$ affixed to frame $12_C$, and a lower, cylindrical forming mandrel $18_C$ which depends from the upper portion $16_C$. The forming mandrel $18_C$ is adapted to carry a tube of material to be cut into tubular segments. Thus, the forming mandrel $18_C$ is preferably sized for the desired diameter of the tubular segments to be formed.

In the preferred embodiment of the invention, the tube of material to be cut, designated T, is formed on forming mandrel $18_C$ by spiral winding. Accordingly, FIGURE 15 diagramatically illustrates a strip of material $M_C$ being wound on forming mandrel $18_C$ to form tube $T_C$. As disclosed in copending application Serial No. 451,401, a driven winding belt (not shown) is preferably provided for spirally winding the tube $T_C$ from the strip of material $M_C$. Attendant to tube formation in this manner, the formed tube of material rotates about the forming mandrel $18_C$, with the tube of material being relatively advanced toward the free end of the forming mandrel $18_C$, as indicated by arrow $A_C$. It will be noted that the forming mandrel $18_C$ is preferably threadably or otherwise releasably connected with the upper mandrel portion $16_C$, thus facilitating replacement of the forming mandrel $18_C$ with differently sized mandrels for forming tube $T_C$ of the desired diameter.

In order to effect internal cutting of tube $T_C$ for forming tube segments, one such segment being shown in FIGURE 16 and designated $S_C$, a rotary cutter assembly $20_C$ is provided within the mandrel assembly $14_C$. The cutter assembly $20_C$ is preferably arranged concentrically within the mandrel assembly $14_C$, and is rotatably supported therein by upper and lower bearings $22_C$ and $24_C$. By this construction, the cutter assembly $20_C$ is adapted to rotate about an axis coinciding with the centerline of mandrel assembly $14_C$, with the cutter assembly preferably configured for relatively high speed

-34-

rotation, such as on the order of 1000-2000 revolutions per minute.

In order to effect rotary drive of cutter assembly $20_C$, the cutter assembly includes a generally cylindrical cutter drive member $26_C$ having one end which extends above frame $12_C$ with a cutter drive pulley $28_C$ affixed thereto. A cutter drive motor $30_C$ is mounted on frame $12_C$, with a motor drive pulley $32_C$ affixed to the motor shaft acting through a cutter drive belt $34_C$ to rotate cutter assembly $20_C$ within mandrel assembly $14_C$.

The rotary cutter assembly $20_C$ further includes an elongated, generally cylindrical cutter arbor $36_C$ which extends within cutter drive member $26_C$, and extends within mandrel assembly $14_C$ from the free end of forming mandrel $18_C$ to above frame $12_C$ of the apparatus. The cutter arbor $36_C$ is adapted for rotation together with cutter drive member $26_C$, and is further adapted for axial movement with respect to the drive member $26_C$ as they rotate together. To this end, a first flanged cam coupling $38_C$ is keyed to cutter arbor $36_C$ above cutter drive pulley $28_C$. To effect rotation of cutter arbor $36_C$ with cutter drive member $26_C$, a drive pin $40_C$ extends from drive member $26_C$ and drive pulley $28_C$ partially into a pin drive opening $41_C$ defined by first flanged coupling $38_C$. By this construction, the cutter arbor $36_C$, which is illustrated in FIGURE 15 in its upwardly-most position with respect to mandrel assembly $14_C$, is adapted to move axially downwardly of drive member $26_C$ and mandrel assembly $14_C$. Bushings $42_C$ and $44_C$ disposed between drive member $26_C$ and cutter arbor $36_C$ facilitate relative axial movement

-35-

between the drive member and cutter arbor as they rotate together.

The rotary cutter assembly $20_C$ further includes an elongated blade actuating rod $46_C$ which is disposed within cutter arbor $36_C$ and extends substantially the length thereof. The blade actuating rod $46_C$ is also adapted for rotation with cutter arbor $36_C$ and drive member $26_{C'}$ and to this end, a rod drive coupling $48_C$ is affixed to actuating rod $46_C$ near the upper end thereof with a pin $50_C$ or like fastening means. In order to couple cutter arbor $36_C$ with blade actuating rod $46_C$ in driving relation, the rod drive coupling $48_C$ includes a key portion $52_C$ which is received within a key slot portion $54_C$ of cutter arbor $36_C$. This configuration results in cutter arbor $36_C$ positively acting to rotatably drive blade actuating rod $46_C$ therewith, with this configuration further permitting relative axial movement between the blade actuating rod $46_C$ and the cutter arbor $36_C$ as they rotate together (actuating rod $46_C$ is illustrated in its upwardly-most position in FIGURE 15). Thus, the clearance provided between rod drive coupling $48_C$ and the upper end of cutter arbor $36_C$ must be sufficient to accommodate relative axial movement of the actuating rod $46_C$ and the cutter arbor.

To effect the desired axial movement of blade actuating rod $46_{C'}$ a second flanged cam coupling $56_C$ is connected to blade actuating rod $46_C$. A bushing $58_C$ is interposed generally between the upper end of cutter arbor $36_C$ and the second flanged coupling $56_C$ to accommodate axial movement of the coupling $56_C$ with respect to the cutter arbor. An end nut $60_C$ threadingly engages

-36-

the second flanged coupling $56_C$, and affixes the coupling $56_C$ to the rod drive coupling $48_C$ for rotation of the flanged $56_C$ coupling together with blade actuating rod $46_C$.

Thus, by the above-described construction, cutter drive member $26_C$ rotatably drives cutter arbor $36_C$, which in turn rotatably drives blade actuating rod $40_C$. During rotation together, the cutter arbor $36_C$ is relatively axially movable within cutter drive member $26_C$, with blade actuating rod $46_C$ being likewise relatively axially movable within the cutter arbor $36_C$.

The present invention contemplates that attendant to reciprocable relative axial movement of cutter arbor $36_C$ and blade actuating rod $46_C$, one or more cutting blades of the rotary cutter assembly $20_C$ are moved inwardly and outwardly of forming mandrel $18_C$ at its free end. In this embodiment of the present invention, this cutting action is provided by one or more flexible cutting blades $66_C$ (two being illustrated). Each blade $66_C$ has one end operatively connected with the blade actuating rod $46_C$, such as by disposition of the ends of blades $66_C$ in a split portion of the rod $46_C$, with the blades secured such as by pin $68_C$. The blades $66_C$ extend generally outwardly in opposite directions from the blade actuating rod $46_C$, with the inward and outward movement of the blades $66_C$ with respect to forming mandrel $18_C$ preferably guided by a pair of the guide rollers $70_C$ mounted on cutter arbor $36_C$ in respective operative engagment with blades $66_C$. The movement of blades $66_C$ is further preferably guided by a guide disc $72_C$ carried by cutter arbor $36_C$ having suitably shaped arcuate guiding surfaces so that the cutting end portions of blades $66_C$ move inwardly and outwardly of forming mandrel $18_C$ attendant to relative axial movement of cutter arbor $36_C$ and blade actuating rod $46_C$. If desired, a further pair of guide rollers can be provided on the guide disc $72_C$ for respectively guidingly engaging the blades $66_C$ generally along the downwardly facing surfaces of the cutting portions of the blades.

As noted above, very high speed formation of tubular segments $S_C$ from tube of material $T_C$ is facilitated by movement of cutter blades $66_C$ in the direction A of tube advancement during internal cutting of the tube $T_C$. Thus, the present apparatus includes a cam mechanism which operates to not only relatively axially move actuating rod $46_C$ and cutter arbor $36_C$ for reciprocably moving blades $66_C$ inwardly and outwardly of forming arbor $18_C$, but which also operates to move the blades $66_C$ in the direction A of tube advancement during cutting.

The cam mechanism of the present apparatus includes a cam support $78_C$ mounted on frame $12_C$, and which rotatably supports a cam shaft $80_C$ by means of bearings $82_C$ (FIGURE 17). The cam shaft $80_C$ is driven via a drive coupling $84_C$, with power to the coupling $84_C$ provided by a cam drive motor $86_C$ operating via a cam drive gearbox $88_C$, both of which are mounted on frame $12_C$.

Axial movement of cutter arbor $36_C$ and blade actuating rod $46_C$ is adapted to be effected via first and second flanged cam couplings $38_C$ and $56_C$, and to this end the cam mechanism includes a pair of cams $90_C$ each having the same cam profile, both of the cams $90_C$ being mounted on cam shaft $80_C$ on respective opposite sides of cam support $78_C$. The cams $90_C$ effect axial movement of cutter arbor $36_C$ via a pair of first cam follower links or rockers $92_C$ affixed to respective opposite ends of a link rocker shaft $94_C$ rotatably supported on cam support $78_C$ so that links $92_C$ are pivotally movable together. Each of follower links $92_C$ has mounted thereon at one end a cam roller follower $96_C$ for operative engagement with a respective one of cams $90_C$, with each link $92_C$ acting through first flanged cam coupling $38_C$ (affixed to cutter arbor $36_C$) by a respective coupling roller $98_C$ disposed between the flanges of coupling $38_C$. While it will be recognized that the desired axial movement of cutter arbor $36_C$ could be likewise effected through a single cam follower link $92_C$, the provision of a pair of links $92_C$ operating on opposite sides of flanged coupling $38_C$ obviates problems of cocking or the like of the coupling $38_C$ which could otherwise interfere with the desired high speed operation of the present apparatus.

The desired axial movement of blade actuating rod $46_C$ is similarly effected. The cam mechanism of the apparatus further includes a pair of second cam follower links or rockers $100_C$ which are also fixed to respective opposite ends of a rocker shaft $102_C$ rotatably supported in cam support $78_C$ for pivotal movement of the follower links $100_C$ together. Each follower link $100_C$ has mounted thereon at one end a cam roller follower $104_C$ for operative engagement with a respective one of cams $90_C$, with the other end of each follower link $100_C$ having a coupling roller $106_C$ operatively disposed between the flanges of second flange cam coupling $56_C$ connected with blade actuating rod $46_C$. A pair of cam springs $108_C$ held in captive relation between each respective pair of links $100_C$ and $92_C$ assures positive operative engagement of the follower links with the cams $90_C$.

Notably, the desired mode of cutting operation by axial movement of blade actuating rod $46_C$ and cutter arbor $36_C$ can be commonly effected by cams $90_C$ operating through both first and second cam follower links $92_C$ and $100_C$. As will be recognized, this permits the present apparatus to be quite compact and readily fabricated at minimum expense. As will be further recognized, however, other cam arrangements can be readily employed for effecting the desired axial movement of cam actuating rod $46_C$ and cutter arbor $36_C$. Further, the arrangement can be fabricated other than as illustrated depending upon the exact cutting action desired. The cam profiles, the relative positions of first and second follower links $92_C$ and $100_C$, the length and fulcrum points of the follower links, and other design parameters can be very widely varied to effect operation as follows.

As illustrated in FIGURE 17, blade actuating rod $46_C$ and cutter arbor $36_C$ are positioned in their upwardly-most dispositions. Spiral winding of tube of material $T_C$ on forming mandrel $18_C$ is initiated such that the formed tube of material advances in direction A along forming mandrel $18_C$ toward its free end. In the positions of blade actuating rod $46_C$ and cutter arbor $36_C$ illustrated in FIGURE 15, flexible cutting blades $66_C$ are in their retracted position with respect to forming mandrel $18_C$ so that the formed tube of material $T_C$ can pass by the blades and off of the free end of mandrel $18_C$.

-40-

Cutter drive motor $30_C$ is then started so as to rotate cutter assembly $20_C$ within mandrel assembly $14_C$. Cam drive motor $86_C$ is next started to initiate cutting, with selected variation in the speed of cam drive motor $86_C$ and the speed of formation of tube $T_C$ by spiral winding permitting tubular segments $S_C$ of various selected dimensions to be formed.

In each cycle of cutting, cams $90_C$ operate through the cam follower links $100_C$ to first relatively axially move blade actuating rod $46_C$ with respect to cutter arbor $36_C$ so that the cutting portions of flexible blades $66_C$ are moved outwardly of and extend beyond the outer surface of forming mandrel $18_C$, as illustrated in FIGURE 16. The cams $90_C$ thereafter act through the cam follower links $92_C$ and $100_C$ to axially move blade actuating rod $46_C$ and cutter arbor $36_C$ together with respect to mandrel assembly $14_C$. By this action, the cutting portions of flexible blades $66_C$ are moved in the direction $A_C$ of advancement of tube of material $T_C$ as the blades internally cut the tube to form tubular segment $S_C$. As noted, this is a very important feature of the present invention since it permits very high speed formation of tubular segments $S_C$ while providing each segment $S_C$ with a generally cylindrical configuration. Presuming that the speed with which tube of material $T_C$ is being advanced toward the free end of forming mandrel $18_C$ is constant, it will be recognized that the speed of axial movement of blades $66_C$ in the direction of tube advancement must be the same as the speed of tube advancement to form tubular segments which are actually truly cylindrical. In practice, however, the speed of axial blade movement can be

-41-

somewhat greater or somewhat less than the speed of tube advancement while still permitting formation of tubular segments $S_C$ which are sufficiently cylindrical in configuration to be acceptable. An excessive difference between the speed of tube advancement and the speed of axial blade movement results in the formation of spiral rather than circular cuts in the tube $T_C$.

After one of the segments $S_C$ has been cut from the tube of material $T_C$, the axial movement of blade actuating rod $46_C$ and cutter arbor $36_C$ is reversed to complete the cutting cycle. The actuating rod $46_C$ is first axially moved relative to the cutter arbor so that the cutting portions of blades $66_C$ are retracted inwardly of the outer surface of forming mandrel $18_C$, and the actuating rod $46_C$ and the cutter arbor $36_C$ are thereafter axially moved together upwardly within mandrel assembly $14_C$ in the direction opposite of the direction of tube advancement. Retraction of the cutting portions of blades $66_C$ before upward movement of the blades prevents interference with the tube of material $T_C$ as it is advanced along and past the free end of forming mandrel $18_C$.

The above steps are cyclically repeated for essentially continuous formation of tubular segments $S_C$ as tube $T_C$ is spirally wound on forming mandrel $18_C$. Each internal cut of tube $T_C$ is effected very quickly due to the preferred relatively high speed rotation of cutter assembly $20_C$ within mandrel assembly $14_C$ with the apparatus being readily capable of operating to form hundreds of tubular segments from tube $T_C$ per minute (the number of segments formed per minute being related to the desired diameter, since a smaller diameter tube

-42-

$T_C$ can be more quickly spirally wound). Thus, the highly efficient manner in which each spirally wound tube segment is formed will be readily appreciated.

Because the formation of relatively large diameter tubular segments requires that a relatively larger cut be effected by blades $66_C$, the use of two blades $66_C$ is preferred for formation of such segments. Additionally, cutter assembly $20_C$ is preferably rotated in the direction of spiral winding of tube $T_C$. Thus, if tube $T_C$ is being fomed by attendant to rotation about forming mandrel $18_C$ in a counter-clockwise direction (when viewed from the free end of the mandrel), spiral winding of the tube is effected clockwise, and thus cutting of the tube is preferably likewise effected in a clockwise direction, although the cutting of the tube can be effected in a direction opposite to the direction of spiral tube formation.

FIGURE 19 illustrates a modified cutter assembly for the present apparatus. In this modified embodiment, a modified cutter arbor $136_C$ rotates within forming mandrel $18_C$ and is adapted for relative axial movement therein in the manner described above. This embodiment further includes a modified blade actuating rod $146_C$ which extends within cutter arbor $136_C$ for rotation therewith, and which is adapted for relative axial movement with respect thereto. The blade actuating rod $146_C$ includes a blade cam portion $147_C$ at its free end, with relative axial movement of the actuating rod $146_C$ with respect to the cutter arbor $136_C$ being adapted to provide inward and outward movement of a blade block $149_C$ with respect to forming mandrel $18_C$. Blade block $149_C$ is carried by cutter arbor $136_C$ such as by suitable slots or the like, with the blade block $149_C$ carrying a cutting blade $151_C$ adapted to move inwardly and outwardly of the outer surface of forming mandrel $18_C$. A pair of blade cam rollers $153_C$ are mounted on blade block $149_C$, thus operatively connecting the blade block and the blade $151_C$ with the blade actuating rod $146_C$. It will be noted that this modified embodiment of the rotary cutter operates somewhat differently than the previously described cutter arrangement in that upward axial movement of actuating rod $146_C$ with respect to cutter arbor $136_C$ causes the cutting portion of blade $151_C$ to move outwardly, and vice versa. Accordingly, the cam mechanism of the apparatus for axially moving the cutter arbor $136_C$ and the blade actuating rod $146_C$ can be suitably modified for effecting the axial movement of the actuating rod and the cutter arbor in the desired timed manner.

D. APPARATUS AND METHOD FOR APPLYING
HEAT-SHRINKABLE MEMBERS TO CONTAINERS

Brief Description

This aspect of the present invention contemplates a method and apparatus for continuously and automatically applying annular-shaped, heat-shrinkable members to containers. Notably, the arrangement includes a very efficient vacuum-operated transfer mechanism for continuously positioning the heat-shrinkable members in respective association with a continuous supply of containers. Further, the apparatus can include a unique arrangement for supporting and positioning each heat-shrinkable member in a predetermined position with respect to its associated container prior to heating of the member for heat-shrink fitment to the container.

-44-

This feature of the present invention facilitates application of an appropriately sized heat-shrinkable member to a container which is not suitably configured to support the heat-shrinkable member in the desired relative position prior to and during heat-shrinking of the member into conformance with the container.

The apparatus of the present invention includes a container conveyor for carrying and moving the containers to which the annular-shaped, heat-shrinkable members are to be respectively applied. The apparatus further includes a feed magazine positioned in association with the container conveyor for holding a quantity of the heat-shrinkable members. The feed magazine is preferably inclined so that the feed of the heat-shrinkable members is by gravity.

The apparatus further includes a transfer mechanism for transferring the heat-shrinkable members from the feed magazine into respective association with the containers on the conveyor. The transfer mechanism is positioned above the container conveyor, and functions such that the heat-shrinkable members are sequentially releasably retained at an acute angle with respect to the direction of movement of the container conveyor. By releasably holding each heat-shrinkable member within the path of the moving containers, each container acts against its respective member by engagement with its inside surface to move the member from the transfer. mechanism into association with the container for subsequent heat-shrinking. Notably, the transfer mechanism includes means for applying suction to the transversely opposite outer sides of each heat-shrinkable member for releasably retaining each

-45-

member. The transfer mechanism further preferably includes a pair of stops positioned adjacent the suction-applying means. The stops are spaced apart a distance less than the transverse dimension of each heat-shrinkable member, and thus coact with the suction-applying means to releasably retain each member for transfer to its respective container.

The present apparatus further includes a heat tunnel or the like for heating each heat-shrinkable member so that it shrinks into conformance with its respective container. As will be recognized, some containers are configured such that each container supports its respective heat-shrinkable member in the desired relative position, so that subsequent heating of the member shrinks it into the desired conformance with the container, such as for formation of a tamper band.

In distinction, many containers are configured such that the container itself cannot support a heat-shrinkable member in the desired relative position, such as for formation of a tamper-evident seal at the closure of the container. In order to accommodate positioning of a heat-shrinkable member in association with the upper portion of the container (such as about its lid portion), the present apparatus includes means for supporting each heat-shrinkable member is a predetermined position relative to its respective container prior to the member being heat-shrunk into conformance with the container. In the illustrated embodiment, the positioning means comprises a pair of support rails which extend generally from the transfer mechanism of the apparatus into its heat tunnel. To avoid excessive heating of the rails so that the heat-shrinkable members do not begin to

-46-

soften and stick to the rails, or shrink in an undesired manner as soon as they contact the support rails, means are provided for cooling the support rails.

In order to facilitate even and uniform shrinkage of the heat-shrinkable members as they pass through the heat tunnel, the present apparatus preferably includes means for rotating the containers with respect to the container conveyor as the heat-shrinkable members are heated.

Numerous other features and advantages of the present invention will become readily apparent from the following description, the accompanying drawings, and the appended claims.

Brief Description of the Drawings

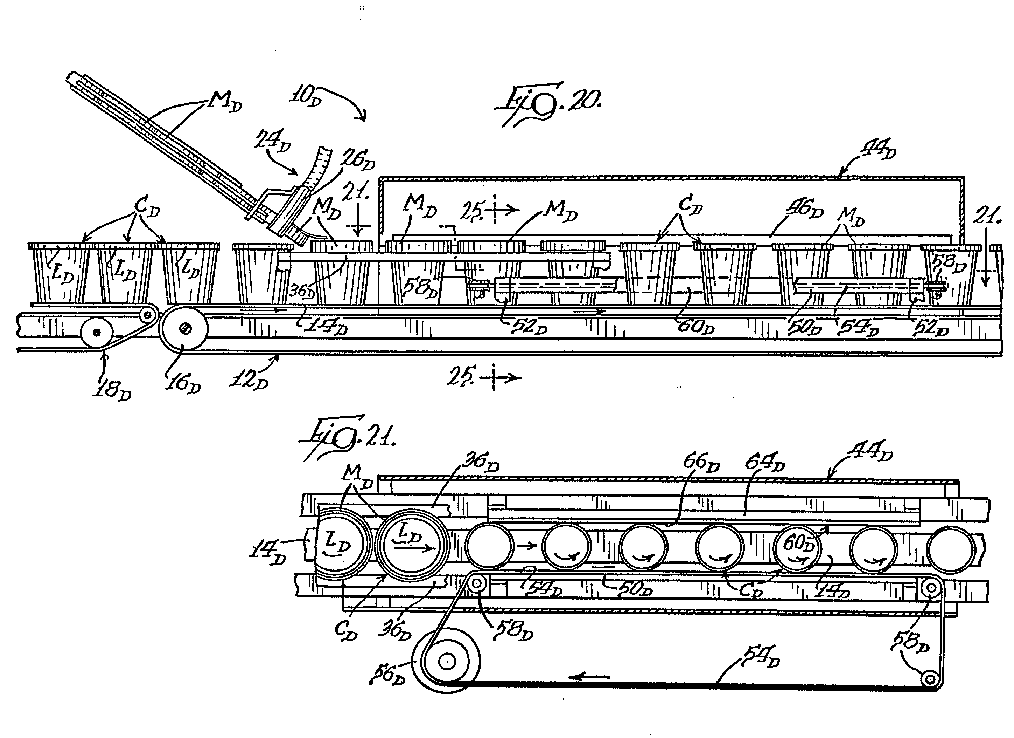

FIGURE 20 is a diagrammatic side elevational view, in partial cutaway, illustrating an apparatus for applying heat-shrinkable members embodying the principles of the present invention;

FIGURE 21 is a diagrammatic top plan view of the present apparatus taken along lines 21-21 in FIGURE 20;

FIGURE 22 is an enlarged perspective view, in partial cutaway, of a portion of the apparatus illustrated in FIGURE 20;

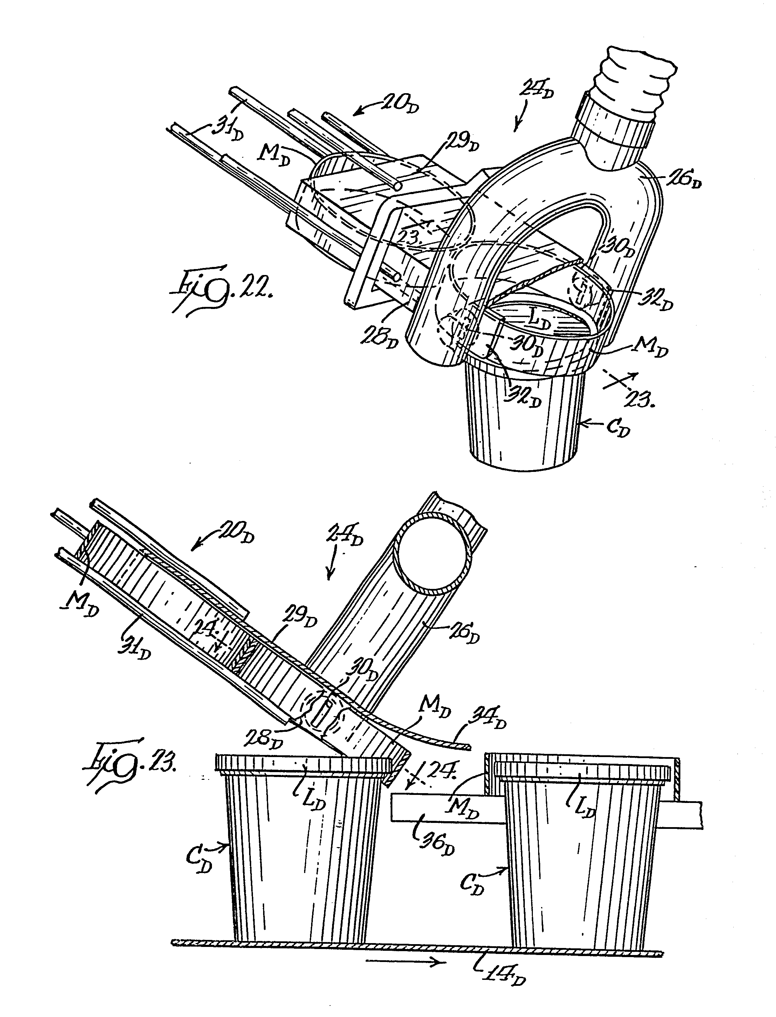

FIGURE 23 is a cross-sectional view taken generally along lines 23-23 of FIGURE 22;

FIGURE 24 is a view, in partial cross-section, taken generally along lines 24-24 of FIGURE 23; and

FIGURE 25 is an enlarged cross-sectional view of the apparatus illustrated in FIGURE 22 taken generally along lines 25-25 in FIGURE 22.

-47-

## Detailed Description

FIGURES 20 and 21 diagrammatically illustrate an apparatus $10_D$ embodying the principles of the present invention for applying heat-shrinkable members to containers. As will be further described, the present apparatus is adapted to automatically and continuously function to sequentially or serially apply the heat-shrinkable members, designated $M_D$, in respective association with the containers, each designated $C_D$, and each including a lid portion $L_D$.

Each heat-shrinkable member $M_D$ is annular-shaped and generally cylindrical in configuration, with each being appropriately sized relative to the dimensions of each container $C_D$ for the intended purpose of the heat-shrinkable members. Thus, heat-shrinkable members $M_D$ are illustrated of a size which is appropriate for formation of tamper-evident seals (i.e., tamper bands) on containers $C_D$. Each member $M_D$ is preferably predominantly heat-shrinkable in a radial direction with respect to the axis of each member. Members $M_D$ having this characteristic can be very efficiently formed by spiral winding in accordance with the teachings of copending U.S. patent application Serial No. 451,401, filed December 20, 1982. As will be recognized, the present invention is readily adaptable for application of heat-shrinkable members which have been otherwise formed. Each member $M_D$ comprises suitably thin, heat-shrinkable material, preferably expanded polystyrene. Other heat-shrinkable expanded thermoplastic materials, such as polypropylene, polyethylene, and polyvinyl chloride, can also be used. As will be recognized, formation of members

$M_D$ from such material results in some resilient flexibility for each of the members $M_D$.

The apparatus $10_D$ of the present invention includes a container conveyor, designated $12_D$, including an upper run $14_D$ for carrying and moving containers $C_D$ in the direction of the arrows shown in FIGURE 20. The conveyor $12_D$ can include suitable conveyor rollers $16_D$ for support thereof. Because containers $C_D$ are preferably carried on conveyor $12_D$ so that the portions of the containers that receive members $M_D$ are spaced apart, the containers $C_D$ may be supplied to conveyor $12_D$ from a feed conveyor $18_D$ which moves at a speed less than that of conveyor $12_D$ for spacing the containers on conveyor $12_D$.

As containers $C_D$ are advanced by conveyor $12_D$, the present method contemplates that the heat-shrinkable members $M_D$ are positioned in respective association with the containers $C_D$ for subsequent heating of the members $M_D$ so that they shrink into conformance and embrace each container $C_D$. To this end, the apparatus $10_D$ includes an inclined gravity feed magazine $20_D$ positioned in association with conveyor $12_D$. The feed magazine $20_D$ is adapted to hold a quantity of the members $M_D$ for sliding movement by gravity. The members $M_D$ intermittently move within the feed magazine $20_D$ as the members $M_D$ are received one-at-a-time by a transfer mechanism, designated $24_D$, positioned at the end of the feed magazine above container conveyor $12_D$.

The transfer mechanism $24_D$ functions to releasably retain each member $M_D$ so that each member extends into the path of the moving containers. Each member $M_D$ is releasably held

-49-

relative to the moving containers $C_D$ at an acute angle with respect to the direction of movement of containers $C_D$ on conveyor $12_D$. By releasably positioning each member $M_D$ in this manner, the forwardly disposed inside surface each member $M_D$ is engaged by a forwardly disposed portion of its respective one of the containers $C_D$ and withdrawn from the transfer mechanism. Each member $M_D$ is preferably held at an acute angle by the transfer mechanism $24_D$ in the sense that the plane extending through each member perpendicularly to its axis is disposed at an acute angle to the direction of movement of containers $C_D$. This transfer action is best illustrated in FIGURES 22, 23, and 24.

Notably, the transfer mechanism $24_D$ includes an arrangement for applying suction to each member $M_D$ for releasably retaining each member in position for transfer to its respective container. To this end, the transfer mechanism includes a bifurcated vacuum plenum $26_D$ connected to a pair of side plates $28_D$ which extend from feed magazine $20_D$. Each side plate $28_D$ defines a preferably slot-like suction port $30_D$ in communcation with vacuum plenum $26_D$ such that a suction is created at each suction port $30_D$. The suction ports $30_D$ apply suction to transversely opposite outer sides of each heat-shrinkable member $M_D$ so that each member $M_D$ is releasably retained in position for transfer to its respective container $C_D$. In this regard, the suction ports $30_D$ are preferably spaced apart a distance which corresponds to the maximum transverse dimension or outer diameter of each heat-shrinkable member $M_D$.

Experience has shown that the preferred slot-like configuration of each suction port $30_D$

-50-

desirably permits suction to be applied to each member $M_D$ generally along the vertical extent of each member $M_D$, with suction preferably applied at or just forwardly of the transverse center line of each member $M_D$ (see FIGURE 24). By this arrangement, undesired deformation of the members $M_D$ by application of suction thereto is avoided. Because each member is relatively flexible, application of suction to each member substantially ahead of or behind its transverse center line can result in each member undesirably "bowing" or otherwise being deformed from a circular configuration. The degree of suction applied is selected according to the weight of the members $M_D$, bearing in mind that the members are preferably formed from heat-shrinkable material which is relatively lightweight. Thus, the vacuum within plenum $26_D$ will usually be on the order of several pounds per square inch below atmospheric pressure.

Thus, as each member $M_D$ is moved from the transfer mechanism $24_D$ by engagement by its respective container $C_D$, the following one of the members $M_D$ moves downwardly by gravity within feed magazine $20_D$ and is received within the transfer mechanism. An upper plate $29_D$ and lower guides $31_D$ of the feed magazine $20_D$ act to guide each member $M_D$ into the transfer mechanism $24_D$ until the suction applied via suction ports $30_D$ acts to grip each member and retain it an acute angle with respect to the container conveyor $12_D$.

Because the suction applied to each member $M_D$ must be sufficiently small to permit each member $M_D$ to be moved from the transfer mechanism $24_D$ by its respective container $C_D$, a pair of spaced apart, inturned stops $32_D$ are preferably provided respectively positioned adjacent the suction ports $30_D$, with the stops $32_D$ being formed from portions of side plates $28_D$. The stops $32_D$ provide an indexing action by engaging each member $M_D$ as it is held by suction ports $30_D$ to further releasably retain each member $M_D$ in position for transfer to its respective container $C_D$. Accordingly, the stops are spaced apart a distance less than the transverse dimension (i.e., diameter) of each member $M_D$. By this construction, sequential transfer of members $M_D$ to containers $C_D$ is effected on a continuous basis as the containers $C_D$ are moved on conveyor $12_D$.

As will be recognized, feed magazine $20_D$ and the transfer mechanism $24_D$ desirably are of straightforward construction for ease of fabrication and maintenance, and provide for highly efficient transfer of members $M_D$ into respective association with containers $C_D$. If desired, the transfer mechanism may include an upper arcuate guide $34_D$ (shown as a portion of upper plate $29_D$) which is adapted to engage the heat-shrinkable members $M_D$ as they are "picked up" by their respective containers $C_D$ to assure that the members $M_D$ move downwardly into proper position with respect to the containers.

The portions of the present apparatus thus far described effect sequential or serial transfer of members $M_D$ into respective association with containers $C_D$. For many applications, this transfer step can be effected so as to position each member $M_D$ in the desired position relative to its container $C_D$ so that subsequent heating of the member $M_D$ causes it to shrink and embrace the container $C_D$ in the intended manner, such as for tamper-indication. For example, if members $M_D$ are

-52-

to be fitted to containers each having a shoulder portion positioned relatively close to the container's neck portion and closure, the members $M_D$ can be transferred to such containers so that each member $M_D$ rests upon the shoulder of its respective container. Subsequent heating of the members $M_D$ then results in their heat-shrinking into conformance with the containers, such as to embrace the closure of each container for tamper-indication.

The containers $C_D$ in the illustrated embodiment do not include a shoulder portion or the like upon which the members $M_D$ can be positioned so that the members are held in the desired relative position with respect to the containers $C_D$. Accordingly, the illustrated embodiment of the present apparatus includes an arrangement for positioning each member $M_D$ in a predetermined position relative to its respective container $C_D$ so that subsequent heating of the member results in its conformance with the intended portion of container $C_D$ (i.e., such that the member $M_D$ embraces the upper portion of the container $C_D$ and its lid portion $L_D$ for tamper-indication).

The positioning arrangement of the present apparatus includes a pair of positioning support rails $36_D$ which extend on respective opposite sides of container conveyor $12_D$. Each support rail $36_D$ is suitably mounted on a rail mount $38_D$, with each support rail $36_D$ defining an internal coolant passage $40_D$ through which coolant flows for cooling of the support rails.

As will be further described, the members $M_D$ are heated for shrinking by a heat tunnel $44_D$ of the apparatus $10_D$. As best shown in FIGURE 20,

-53-

support rails $36_D$ extend generally from the point of transfer of members $M_D$ to containers $C_D$ at transfer mechanism $24_D$, in the direction of conveyor movement into heat tunnel $44_D$. By this arrangement, the members $M_D$ are slidably supported upon the support rails $36_D$ prior to and during initial heating of the members $M_D$ within heat tunnel $44_D$. As the members $M_D$ are moved along support rails $36_D$ by the movement of containers $C_D$ on conveyor $12_D$, the support rails maintain the members $M_D$ in a predetermined relative position with respect to the containers $C_D$ until the members $M_D$ have been sufficiently heated to partially shrink them into conformance with the containers $C_D$ sufficiently to hold the members $M_D$ in correct position on containers $C_D$ for completion of heat-shrink fitment.

Because the support rails $36_D$ extend within heat tunnel $44_D$ a sufficient distance to support the members $M_D$ until the members $M_D$ support themselves on the respective containers $C_D$, the support rails absorb a significant amount of heat energy. By providing the support rails $36_D$ with coolant passages $40_D$, the heat absorbed by the support rails is removed by coolant (such as water) flowing through the passages, thus desirably acting to prevent the support rails from becoming excessively heated. Without cooling of the support rails, their heat could otherwise result in the members $M_D$ becoming softened and tacky so as to undesirably adhere to the rails, or result in undesired, premature shrinkage of the members $M_D$ as they are transferred into association with the containers $C_D$. Thus, cooling of the support rails desirably acts to prevent the members $M_D$ from excessively heat-shrinking as soon as the members $M_D$ contact the support rails, and from adhering to the rails.

The heat tunnel $44_D$ typically includes elongated, electrically-powered heating elements $46_D$ (sometimes referred to as "calrods") positioned on respective opposite sides of container conveyor $12_D$ (FIGURE 25). The heat tunnel $44_D$ is preferably constructed such that its heating elements are positioned proximate to the members $M_D$ as the members are slidably advanced along and off of rails $36_D$ by movement of containers $C_D$ on conveyor $12_D$. Thus, the radiant heat energy from the heating elements $46_D$ impinges upon the heat-shrinkable members $M_D$ so that they shrink into conformance and embrace their respective containers $C_D$.

In order to enhance uniform heating and heat-shrinkage of members $M_D$ as they pass through heat tunnel $44_D$, an arrangement is preferably provided for rotating the containers (and their respective members $M_D$) as the members are heated within the heat tunnel. To this end, the present apparatus includes a belt guide $50_D$ which extends longitudinally within at least a portion of heat tunnel $44_D$ along one side of container conveyor $12_D$. The belt guide $50_D$, which is held by one or more guide supports $52_D$, acts to guide a driven rotating belt $54_D$ which extends along and is movable with respect to the belt guide $50_D$. A suitable belt drive motor $56_D$, preferably positioned outside of heat tunnel $44_D$, acts to drive rotating belt $54_D$ in the direction of movement of container $12_D$, preferably at a substantially greater speed than the speed of

-55-

movement of conveyor $12_D$. A plurality of guide rollers $58_D$ are preferably provided for guiding the movement of belt $54_D$ between motor $56_D$ and belt guide $50_D$.

The rotating belt $54_D$ is adapted to engage a plurality of the containers $C_D$ as they move within heat tunnel $44_D$, and rotate the containers $C_D$ with respect to the conveyor $12_D$. To this end, a fixed rotating guide $60_D$ is provided for cooperation and coaction with the rotating belt $54_D$. The fixed rotating guide $60_D$ extends within heat tunnel $44_D$ in generally opposed relation to belt $54_D$ on the opposite side of conveyor $12_D$. The guide $60_D$, which may be mounted upon one or more guide supports $62_D$, includes a tubular portion $64_D$ to which is affixed an elastomeric surface $66_D$ which engages the containers $12_D$. As the containers are advanced through heat tunnel $44_D$ by conveyor $12_D$, each container is moved into engagement with belt $54_D$ and fixed guide $60_D$ such that the belt $54_D$ rotates the containers as the containers rollingly engage the fixed guide $60_D$. By this arrangement, the containers and their respective heat-shrinkable members $M_D$ are rotated during heating of the members $M_D$ within the heat tunnel $44_D$, thus assuring complete and uniform shrinkage of the members into conformance with the containers. Notably, the preferably tubular portion $64_D$ of fixed rotating guide $60_D$ defines a coolant passage $68_D$ through which coolant (such as water) flows, thus desirably acting to cool the elastomeric surface $66_D$ of the guide and thereby enhance the useful service life of the elastomeric material forming the surface $66_D$ (which would otherwise deteriorate

-56-

undesirably quickly because of the heat to which it is subjected within heat tunnel $44_D$). When the containers $C_D$ exit the heat tunnel $44_D$, application of the heat-shrinkable members $M_D$ is complete. The containers can then be transferred for subsequent packaging, storage, and/or shipment. When, as in the illustrated embodiment, members $M_D$ have been applied for tamper-indication, any attempt to open one of the containers results in a permanent and visually discernible deformation of the tamper-evident seal thus formed.

E. CONTAINER FORMED FROM SPIRALLY-WOUND HEAT-SHRINKABLE MATERIAL, AND METHOD FOR FORMING SAME

Background

In the past, various devices have been developed for forming containers, such as beverage cups, from heat-shrinkable material. For example, U.S. Patents No. 3,854,583, to Amberg et al., No. 3,970,492, to Amberg et al., and No. 4,365,460 to Cress et al. each disclose methods for fabricating plastic containers from heat-shrinkable material.

It is important to note that the method disclosed in each of the above patents requires that discrete strips of heat-shrinkable material be individually formed into cylindrical segments, with subsequent processing steps performed to form containers from the cylindrical segments. As will be recognized, the required formation of the cylindrical segments from discrete strips of material mandates the use of highly specialized equipment for this purpose, significantly adding to the expense and complexity of the overall manufacturing process.

Therefore, it is extremely desirable to provide an improved container construction, as well

-57-

as a method for forming the container, wherein the container comprises spirally-wound heat-shrinkable material, thus facilitating highly efficient and economical fabrication of such containers.

### Brief Description

In accordance with this aspect of present invention, a cup-like container is disclosed, as well as a method for forming the container. Notably, the container of the present invention is formed from a cylindrical, tubular length or segment of spirally-wound heat-shrinkable material which can be very efficiently and economically fabricated in accordance with the teachings of parent patent application Serial No. 451,401. By the use of spirally-wound heat-shrinkable material for formation of the present container, containers of a wide variety of sizes and shapes can be inexpensively and efficiently manufactured.

The container of the present invention includes an upstanding sidewall portion having an upper free edge defining the mouth of the container. In the preferred form, the upper free edge of the sidewall portion is overlapped or curled upon itself to form an enlarged bead portion at the mouth of the container. Additionally, the sidewall portion of the container preferably tapers downwardly and inwardly, thus facilitating nesting of a group of containers for compact storage and shipment.

Significantly, the sidewall portion of the present container comprises spirally-wound heat-shrinkable plastic material. Prior to formation of the container, the heat-shrinkable material is preferably in the form of a cylindrical tubular length or segment which is predominantly heat-shrinkable in a radial direction with respect to

-58-

the axis of the tubular length. For container formation, the tubular length of heat-shrinkable material is oriented such that it is predominantly shrinkable in a radial direction with respect to the vertical axis of the container being formed.

The container of the present invention further includes a bottom end panel portion joined to the sidewall portion of the container at the lower extent of the sidewall portion. In one form of the present invention, the end panel portion of the container comprises the same spirally-wound heat-shrinkable material that forms the sidewall portion of the container, with the end panel portion formed from the lower extent of the tubular length which forms the sidewall portion so that the end panel portion is unitary with the sidewall portion.

In another embodiment, the container end panel portion comprises a separate piece of plastic material joined to the lower extent of the tubular length that forms the container's sidewall portion. In the preferred form of this embodiment of the invention, the end panel portion is formed such that the lower extent of the tubular length of heat-shrinkable material underlies at least the peripheral portion of the separate piece of plastic material in the nature of a lap seam.

The method of the present invention provides for formation of the above-described container. The present method includes forming the above-described tubular length of spirally-wound heat-shrinkable material which is predominantly heat-shrinkable in a radial direction with respect to the axis of the tubular length and the axis of the container being formed. The present method further includes forming the upstanding sidewall portion of the container from

-59-

the tubular length of spirally-wound material, and forming the end panel portion of the container so that it is joined to the sidewall portion.

In practicing the present method, a forming mandrel is provided, with means provided for positioning the tubular length of spirally-wound heat-shrinkable material and forming mandrel in telescopic association with each other such that the forming mandrel is positioned generally within the tubular length. The external surface of the forming mandrel is configured to generally define the interior shape of the container being formed, and thus in the illustrated embodiment has a generally frusto-conical, downwardly inwardly tapering configuration for forming the present container with a downwardly inwardly tapering sidewall portion.

Brief Description of the Drawings

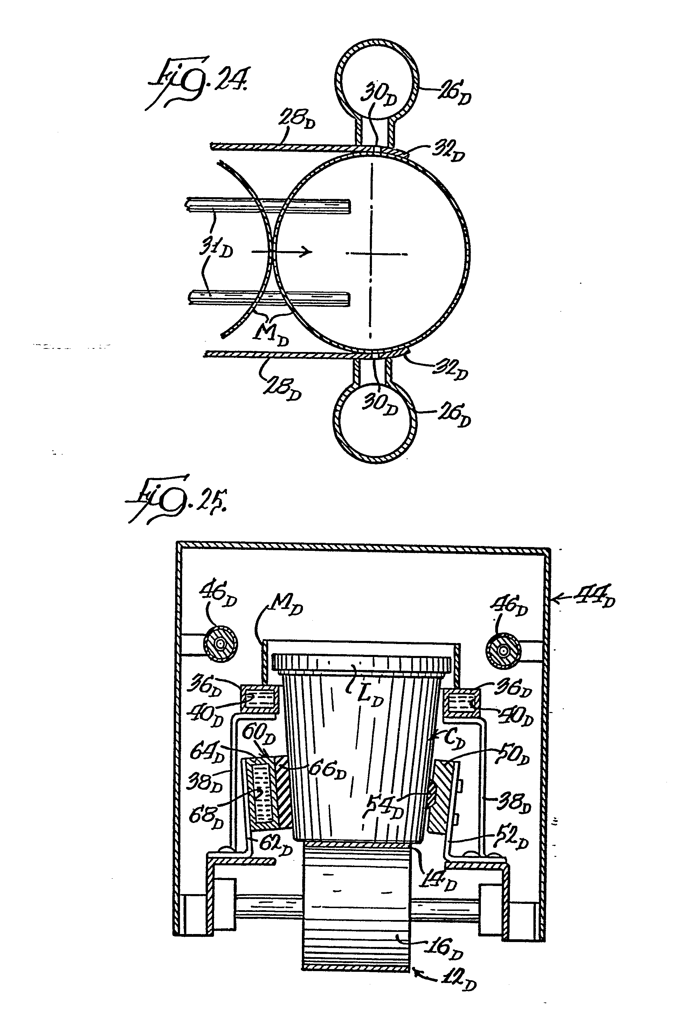

FIGURE 26 is a side elevational, diagrammatic view, in partial cross-section, illustrating the method of the present invention for forming a container;

FIGURE 27 is a diagrammatic view similar to FIGURE 26 further illustrating the method of the present invention;

FIGURE 28 is a diagrammatic view similar to FIGURES 26 and 27 further illustrating the method of the present invention, and illustrating the container of the present invention in cross-section;

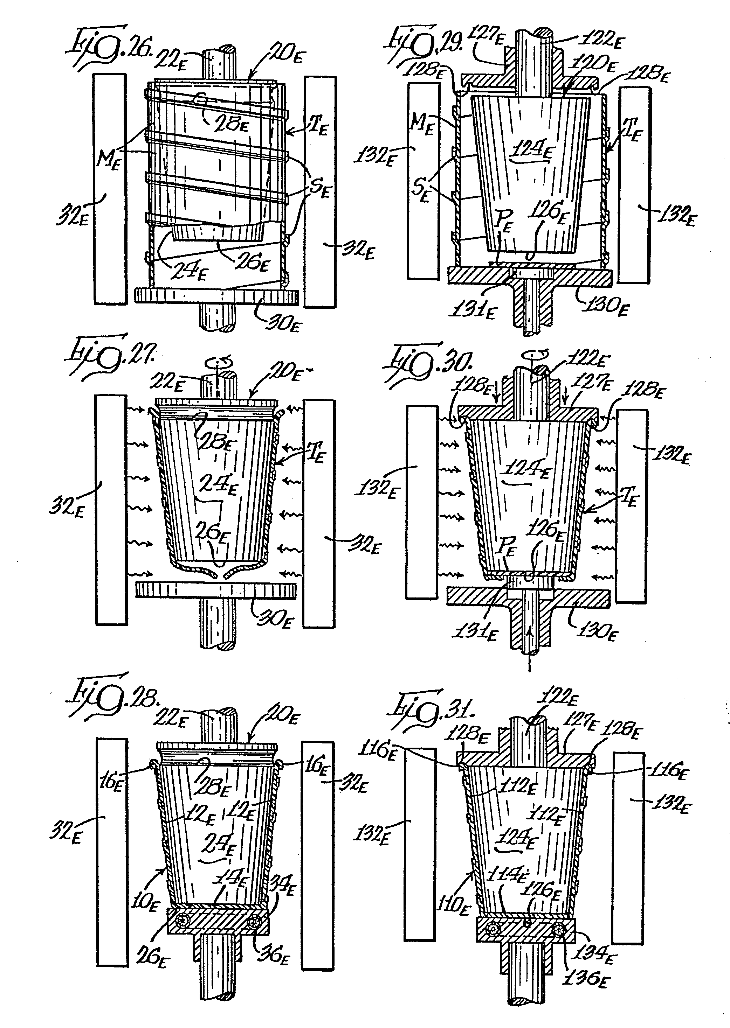

FIGURE 29 is a side elevational, diagrammatic view, in partial cross-section, illustrating a modified form of the method of the present invention for forming a container;

FIGURE 30 is diagrammatic view similar to FIGURE 29 further illustrating the modified form of the method of the present invention; and

-60-

FIGURE 31 is diagrammatic view similar to FIGURES 29 and 30 further illustrating the modified form of the present method, and illustrating in cross-section a modified form of the container of the present invention.

Detailed Description

For the purposes of the present disclosure, terms such as upper and lower, upwardly and downwardly, and like terms of orientation have been used for purposes of clarity, with reference to the orientation of the accompanying drawings. However, it should be understood that a container formed in accordance with the principles herein can be oriented other than illustrated in the accompanying drawings, and that the method of the present invention can be practiced in orientations other than illustrated and hereinafter described.

Referring first to FIGURE 28, therein is illustrated in cross-section a cup-like container $10_E$ embodying the principles of the present invention. The container $10_E$ includes an upstanding sidewall portion $12_E$ preferably having a downwardly, inwardly tapering configuration which facilitates manufacture and permits nesting of a group of containers for storage and shipment. While it is ordinarily preferred to configure container $10_E$ as circular in horizontal cross-section, it will be understood that a container embodying the principles herein can be otherwise configured.

Container $10_E$ further includes an inwardly extending bottom end panel portion $14_E$ joined to sidewall portion $12_E$ at the lower extent thereof. End panel portion $14_E$ is preferably continuous to provide container $12_E$ with a closed, upwardly-opening configuration. However, for some

-61-

applications it may be desirable to form end panel portion $14_E$ as discontinuous. As will be further described, in this embodiment of the present container end panel portion $14_E$ is unitary (i.e., formed from the same piece of material) with sidewall portion $12_E$, the container $10_E$ thus being one-piece in nature.

In the preferred form, container $10_E$ includes a relatively enlarged bead portion $16_E$ at the upper free edge of sidewall portion $12_E$ where the sidewall portion is folded, overlapped, or curled over generally onto itself. Enlarged bead portion $16_E$, which thus defines the mouth of the container, desirably acts to rigidify the container, and facilitates nesting of a group of containers. While the thickness of bead portion $16_E$ is relatively greater than the nominal thickness of sidewall portion $12_E$, the sidewall portion $12_E$ will not be of uniform thickness due to its spirally-seamed configuration. Accordingly, bead portion $16_E$ will be relatively thicker than the predominant portion of sidewall portion $12_E$, but the bead portion is not necessarily thicker than the sidewall portion $12_E$ at its spirally-oriented seams.

Significantly, the entire container $10_E$, including its sidewall portion $12_E$ and its end panel portion $14_E$, are formed from a cylindrical tubular length or segment of spirally-wound heat-shrinkable material, designated $T_E$ in the drawings. Tubular length $T_E$ can be very efficiently and economically fabricated in accordance with the teachings of parent patent application Serial No. 451,401. The tubular length $T_E$ comprises and is formed from a continuous strip of plastic material, designated M, which is primarily

-62-

oriented and shrinkable in the direction of its length (i.e., in the direction of its formation).

The continuous strip $M_E$ comprises plastic material such as polystyrene foam or expanded polystyrene material, or like plastic material which is heat-shrinkable, such as polypropylene, polyethylene, and polyvinyl chloride. For example, the strip of plastic material can comprise expanded polystyrene having a thickness on the order of 0.020 to 0.040 inches, with a density on the order of 10 to 30 pounds per cubic foot, for formation of disposable beverage containers or the like. However, it will be recognized that some plastic materials do not exhibit sufficient imperviousness to liquids or semi-liquids to assure long shelf life for containers used for packaging beverages or food products, particularly when the thickness of such plastic materials is selected for economical container manufacture. Therefore, for formation of some types of containers, the strip of material $M_E$ from which tubular length $T_E$ is formed preferably comprises a lamination of two or more heat-shrinkable plastic materials. For example, a heat-shrinkable lamination of a suitably liquid-impervious plastic film and expanded polystyrene permits formation of a container which retains liquid for long periods without seepage or "sweating", yet exhibits desired strength and rigidity.

The tubular length $T_E$ is formed from strip $M_D$ by spiral-winding such that angle of intersection of the primary direction of orientation and shrinkage of the spirally-wound strip $M_D$ with a plane perpendicular to the axis of the tubular length $T_E$ is no more than about 35 degrees. The strip $M_E$ is preferably overlapped upon itself during

-63-

spiral-winding, and joined to itself to form the spirally-oriented seam, designated $S_E$, of the resultant tubular length. In this regard, the strip $M_E$ can be joined to itself by the use of adhesive, by heat-sealing, or by solvent-welding so that the amount of overlap at spiral seam $S_E$ is on the order of one-sixteenth to one-eighth inch. Notably, the use of solvent-welding for formation of tubular length $T_E$ from strip $M_E$ has been found to provide sufficient strength at the region of the spiral seam $S_E$ to assure the integrity and liquid-imperviousness of the seam after heat-shrinking of the tubular length $T_E$ for container formation.

By formation of tubular length $T_E$ in the above-described manner, the tubular length is predominantly heat-shrinkable in a radial direction with respect to the axis of the tubular length, with the tubular length $T_E$ oriented for container formation such that it is predominantly heat-shrinkable in a radial direction with respect to the vertical axis of the container being formed. By appropriate pre-printing of strip $M_E$ prior to sprial-winding, containers formed therefrom are provided with a decorative pattern or the like on their external surfaces.

The method for forming container $10_E$ will now described in detail. Referring first to FIGURE 26, an apparatus for practicing the present invention can include a forming mandrel $20_E$ which is positionable in telescopic association with tubular length $T_E$ of the spirally-wound heat-shrinkable material such that the forming mandrel is positioned generally within tubular length $T_E$. A mandrel support $22_E$ is provided for supporting forming

-64-

mandrel $20_E$. As will appreciated, the external surface of forming mandrel $20_E$ is configured to generally define the shape of the interior of the container $10_E$ to be formed. Accordingly, forming mandrel $20_E$ is illustrated as including a frusto-conical, generally outwardly facing peripheral side surface $24_E$ which is downwardly, inwardly tapering to form the downwardly, inwardly tapering sidewall portion $12_E$ of container $10_E$.

Forming mandrel $20_E$ further includes a generally downwardly facing lower surface $26_E$ against which end panel portion $14_E$ of container $10_E$ is formed. While surface $26_E$ has been illustrated as flat, it will be understood that the surface may be concave or otherwise configured, depending upon the desired configuratuion of container end panel portion $14_E$. Additionally, forming mandrel $20_E$ can define a generally outwardly opening, annular bead-forming recess $28_E$ near the upper end of the forming mandrel for formation of enlarged bead portion $16_E$ of container $10_E$.

The illustrated apparatus further includes a tube support $30_E$ for supporting tubular length $T_E$ in telescopic association with forming mandrel $20_E$. Tubular length $T_E$ is positioned such that it extends about forming mandrel $20_E$, with the upper edge of tubular length $T_E$ positioned in close proximity to the bead-forming recess $28_E$, and with the lower extent of the tubular length $T_E$ projecting below and extending substantially beyond the downwardly facing lower surface $26_E$ of forming mandrel $20_E$. As will be recognized by those familar with the art, the tubular length $T_E$ can be positioned in association with forming mandrel $20_E$

-65-

other than by the use of a member such as tube support $30_E$, such as by appropriately positioned vacuum ports or the like for holding tubular length $T_E$ in position by suction. Such vacuum ports can be defined by the forming mandrel itself for applying suction to the internal surface of tubular length $T_E$, or can be provided by appropriate means positioned to apply suction to the external surface of the tubular length $T_E$.

After tubular length $T_E$ and forming mandrel $20_E$ have been relatively positioned as illustrated in FIGURE 26, the tubular length $T_E$ is heated so that it shrinks and conforms to the external surface of the forming mandrel $20_E$. This step is illustrated diagrammatically in FIGURE 27 wherein one or more heaters $32_E$ are illustrated positioned in association with forming mandrel $20_E$ for heating the tubular length $T_E$, causing it to heat-shrink. Heaters $32_E$ can comprise electrically-powered heating elements or like infra-red radiation heating devices so that heat energy impinges upon the outer surface of tubular length $T_E$. Use of a heat tunnel for heating is also possible, but heating by infra-red radiation has proven more controllable and efficient.

To assure uniformity of heating (thus facilitating peripherally uniform shrinkage), mandrel support $22_E$ is preferably rotatably driven so that the forming mandrel and the tubular length $T_E$ positioned thereabout rotate with respect to the one or more heaters $32_E$ during this heating step. Additionally, high speed production of the present container is facilitated by preheating forming mandrel $20_E$ prior to positioning of the mandrel and tubular length $T_E$ in association with each other.

-66-

By pre-heating the forming mandrel to a temperature below the softening point of the material from which tubular length $T_E$ is formed, chilling of the interior surface of the tubular length by the mandrel $20_E$ (which would inhibit shrinkage) is avoided.

During heating of tubular length $T_E$, the upper extent of tubular length $T_E$ shrinks generally into conformance with bead-forming recess $28_E$ of forming mandrel $20_E$ and curls over upon itself, thus forming enlarged bead portion $16_E$ of container $10_E$. It will be noted that the nominal thickness of the sidewall portion $12_E$ will increase somewhat from the top to the bottom of the the sidewall portion $12_E$ due to its inwardly tapered configuration, since tubular length $T_E$ is of generally uniform wall thickness (with the exception of the spirally-oriented seam $S_E$ of the tubular length where continuous strip $M_E$ overlaps itself). Thus, the nominal thickness of sidewall portion $12_E$ progressively increases in the direction of the downward, inward taper of the outwardly facing surface $24_E$ of forming mandrel $20_E$.

As will be recognized, the inwardly tapering configuration of the mandrel $20_E$ requires that the degree of shrinkage to which tubular length $T_E$ is subjected progressively increases from the top to the bottom of the tubular length. Thus, the inwardly tapering sidewall configuration of the container being formed calls for differential shrinkage of tubular length $T_E$.

As illustrated in FIGURE 27, the relative positioning and dimensioning of forming mandrel $20_E$ and tubular length $T_E$ during heat-shrinking results in the lower extent of tubular length $T_E$ heat-shrinking to a position generally beneath the

-67-

downwardly facing lower surface $26_E$ of the forming mandrel. In this embodiment of the invention, this lower extent of tubular length $T_E$ is shaped, fused and sealed to form the end panel portion $14_E$ of container $10_E$, as illustrated diagrammatically in FIGURE 28. For formation of end panel portion $14_E$, a compression member $34_E$ is provided in association with forming mandrel $20_E$ such that the forming mandrel $20_E$ and the compression member $34_E$ are relatively movable toward and away from each other. The end panel-forming surface of compression member $34_E$ is preferably complemental to the lower surface $26_E$ of forming mandrel $20_E$. Means can be provided for heating compression member $34_E$, such as electrically-powered heating element $36_E$ positioned within compression member $34_E$.

After heat-shrinking of tubular length $T_E$ is essentially complete, forming mandrel $20_E$ and tube support $30_E$ are relatively moved out of association with each other, and mandrel $20_E$ and compression member $34_E$ relatively moved into association with each other such that the compression member $34_E$ compresses the lower extent of tubular length against the lower surface $26_E$ of forming mandrel $20_E$. The heat of member $34_E$ provided by heating element $36_E$ acts to shape, fuse, and seal the lower extent of tubular length $T_E$ during this forming step, with the end panel portion $14_E$ thus being formed so that it is unitary with the sidewall portion of container $10_E$. It should be noted, however, that the present method can be practiced without heating of member $34_E$ if the lower extent of tubular length $T_E$ is at a sufficiently high temperature to permit the desired fusing and sealing thereof without the need for additional heating.

Thus, container $10_E$ embodying the principles of the present invention is formed in accordance with the above such that the entire container $10_E$ is formed from the spirally-wound heat-shrinkable tubular length $T_E$. After formation of container $10_E$ is completed, the container can be ejected off of forming mandrel $20_E$ such as by the direction of pressurized air through the forming mandrel against the internal surface of container $10_E$, or by suitably positioned mechanical ejection or stripping means.

Referring now to FIGURE 29-31, modified forms of the present container and method are illustrated. In these figures, elements of the modified container and the apparatus for practicing the modified method which generally correspond to elements of the above-described container and apparatus are so-indicated by like reference numerals in the one-hundred series.

Referring to FIGURE 31, therein is illustrated a cup-like container $110_E$ embodying the principles of the present invention. The container $110_E$ includes an upstanding sidewall portion $112_E$ which, significantly, like the sidewall portion $12_E$ of previously container $10_E$, comprises spirally-wound, heat-shrinkable plastic material. The sidewall portion $112_E$ preferably has a downwardly, inwardly tapering configuration, terminating generally at an end panel portion $114_E$ of container $110_E$ which is joined to the lower extent of the sidewall portion $112_E$.

In distinction from the previously described container $110_E$, the end panel portion $114_E$ of container $110_E$ comprises a separate piece of plastic material, designated $P_E$ in FIGURES 29 and 30, which is joined to the lower extent of the spirally-wound heat-shrinkable tubular length $T_E$ from which container $110_E$ is formed. Thus, container $110_E$ is two-piece in construction rather than one-piece as is container $10_E$. Like container $10_E$, container $110_E$ includes a relatively enlarged bead portion $116_E$ at the upper free edge of sidewall portion $112_E$ which defines the mouth of the container. However, the method and apparatus illustrated in FIGURES 29-31 differ from the previously-described method and apparatus in the manner in which the enlarged bead portion of the container sidewall is formed.

Referring now to FIGURE 29, a forming mandrel $120_E$ is illustrated having a external surface which generally defines the interior shape of the container $110_E$ to be formed. The mandrel $120_E$ is relatively positionable with respect to spirally-wound heat-shrinkable tubular length $T_E$ by means of mandrel support $122_E$ such that the mandrel $120_E$ is telescopically positioned generally within tubular length $T_E$. It should be noted that in practicing this embodiment of the present method, forming mandrel $120_E$ is positioned relative to tubular length $T_E$ such that the upper extent of tubular length $T_E$ extends beyond the upper edge of side surface $124_E$ of the mandrel, with the lower extent of tubular length $T_E$ extending below the lower edge of side surface $124_E$. It will also be noted that since the spirally-wound heat-shrinkable material of tubular length $T_E$ is not the only material from which end panel portion $114_E$ of container $110_E$ is formed, the tubular length $T_E$ need not extend beyond the lower edge of the forming mandrel as much as when tubular length $T_E$ is

-70-

positioned with respect to previously-described forming mandrel $20_E$ for forming one-piece container $10_E$.

As illustrated in FIGURE 29, a bead-forming member $127_E$ is provided positioned in association with forming mandrel $120_E$, with member $127_E$ being relatively movable with respect to the forming mandrel $120_E$. Bead-forming member $127_E$ defines a generally downwardly opening annular bead-forming recess $128_E$ which cooperates with the external side surface $124_E$ of forming mandrel $120_E$ for formation of enlarged bead portion $116_E$ of container $110_E$, as will be further described.

The apparatus illustrated in FIGURE 29 further includes tube support $130_E$ for positioning tubular length $T_E$ in the desired relative position with respect to forming mandrel $120_E$. As noted, suitable vacuum means can alternately be employed. The apparatus further includes a positioning member $131_E$ for relatively positioning the separate piece of plastic material $P_E$ (which is preferably disc-shaped for forming a circular end panel portion $114_E$) generally adjacent the downwardly facing lower surface $126_E$ of forming mandrel $120_E$ for formation of end panel portion $114_E$ of container $110_E$. Again, suitable vacuum means such as vacuum ports defined by mandrel $120_E$ can be employed instead of or in conjunction with positioning member $131_E$ for positioning separate piece P adjacent the forming mandrel.

Referring now to FIGURE 30, the initial formation of container $110_E$ from spirally-wound heat-shrinkable tubular length $T_E$ and separate piece $P_E$ is illustrated. The apparatus includes one or more heaters $132_E$ which are positioned in

-71-

association with forming mandrel $120_E$ for heating tubular length $T_E$, thus causing the tubular length $T_E$ to heat-shrink and generally conform to the external surface of forming mandrel $120_E$ to form the sidewall portion $112_E$ of container $110_E$. During this heating, uniform shrinkage of tubular length $T_E$ is facilitated by rotatably driving mandrel support $122_E$, thereby rotating the forming mandrel $120_E$ and tubular length $T_E$ with respect to the one or more heaters $132_E$.

FIGURE 30 further diagrammatically illustrates positioning of separate piece $P_E$ in association with surface $126_E$ of forming mandrel $120_E$ for subsequent joining of piece $P_E$ to the lower extent of the tubular length $T_E$. In the preferred practice of this embodiment of the present method, separate piece $P_E$ is positioned adjacent the lower surface $126_E$ of forming mandrel $120_E$ prior to heating of tubular length $T_E$ by the one or more heaters $132_E$ for heat-shrinking of the tubular length $T_E$. By this sequence of steps, the tubular length $T_E$ of spirally-wound heat-shrinkable material shrinks and generally conforms to forming mandrel $120_E$ such that the lower extent of tubular length $T_E$ shrinks into a position beneath at least the peripheral portion of separate piece $P_E$ for formation of a lap seam. When heat-shrinking of tubular length $T_E$ is complete, it appears generally as in FIGURE 30.

FIGURE 30 also illustrates the relative movement of forming mandrel $120_E$ and bead-forming member $127_E$ such that bead-forming recess $128_E$ is moved into juxtaposed relation with the side surface $124_E$ of forming mandrel $120_E$. In this regard, forming mandrel $120_E$ and bead-forming member $127_E$

are preferably relatively moved to the position illustrated in FIGURE 30 after initiation of heating of tubular length $T_E$ for heat-shrinking thereof so that the upper extent of tubular length $T_E$ is shaped by and received within bead-forming recess $128_E$ to thereby form the overlapped enlarged bead portion $116_E$ of container $110_E$. It will again be noted that the preferred downwardly inwardly tapering configuration of the sidewall portion $112_E$ of the container $110_E$ being formed results in the nominal thickness of sidewall portion $112_E$ progressively increasing from top to bottom when the container $112_E$ is formed from a tubular length $T_E$ of substantially uniform wall thickness.

FIGURE 31 diagrammatically illustrates completion of formation of container $110_E$ by formation of end panel portion $114_E$ from separate piece of material $P_E$ and from the lower extent of tubular length $T_E$ which underlies the piece of material $P_E$. To this end, a compression member $134_E$ is provided which is relatively movable with respect to forming mandrel $120_E$ such that the compression member $134_E$ compresses separate piece of material $P_E$ and the underlying portion of tubular length $T_E$ against each other and against the lower surface $126_E$ of forming mandrel $120_E$. This lower portion of the container $110_E$ can be heated during this compressing step for fusing and sealing the construction to form a lap seam, and to this end the compression member $134_E$ can be heated such as by means of an electrically-powered heating element $136_E$ within the compression member.

After formation of end panel portion $114_E$, formation of container $110_E$ is complete. The container $110_E$ can be ejected from forming mandrel

$120_E$ by the direction of pressurized air against the internal surface of the container $110_E$, or by suitable mechanical ejection or stripping means.

As previously noted, containers formed in accordance with the present invention preferably comprise heat-shrinkable, plastic material, such as expanded polystyrene. One reason this particular material has found wide-spread use in the manufacture of containers is due to its heat-insulating properties. As also noted, formation of the present container with a downwardly, inwardly tapering sidewall portion results in the sidewall portion progressively increasing in nominal thickness from top to bottom of the container. Additionally, the container sidewall portion is relatively thick at the spirally-oriented seam thereof. Thus, when the present container is formed from heat-insulating material for holding hot beverages or the like, the relatively thicker nature of the lower portion and the spiral seam of the sidewall of the container desirably insulates the heat of a hot beverage from the hand of a person holding the container. However, the desired insulation is provided without excessive overall thickness of the container sidewall portion.

While the apparatus for practicing the present invention has been diagrammatically illustrated herein, it will be recognized by those familiar with the art that an apparatus for practicing the present method can be readily built for high-speed production of the present container. In such an apparatus, a plurality of forming mandrels can be provided, typically with the forming mandrels movably mounted for movement between various processing stations. Because of the ease with which the present container can be manufactured from

-74-

spirally-wound heat-shrinkable material, an apparatus for high-speed production of the container can be readily fabricated, efficiently run, and easily maintained.

-75-

WHAT IS CLAIMED IS:

1. A method of making heat-shrinkable tubular bands, comprising

providing an elongated continuous strip of plastic material oriented and shrinkable primarily in the direction of its length,

spiral winding said strip to form a continuous tube, and

severing spiral wound lengths from said tube to provide individual shrinkable tubular bands, each shrinkable primarily in the radial direction.

2. The method of claim 1, further comprising continuously spiral winding said strip to form an endless continuous tube, and continuously severing spiral wound lengths from said tube to provide a great multiplicity of said individual shrinkable bands.

3. The method of claim 1, in which said strip is wound such that the angle of intersection of the primary direction of orientation of the spiral wound strip with a plane perpendicular to the axis of the tube is no more than about 35 degrees.

4. The method of claim 1 in which said strip is a strip of relatively brittle expanded foam material.

5. The method of claim 1, including preforming said tubular bands to a pre-selected configuration by positioning each said tubular band in association preforming mandrel means generally defining said pre-selected configuration, and heating each said tubular bands so that it conforms to said preforming mandrel means.

6. The method of claim 2, wherein said spiral winding step includes providing mandrel means upon which said strip is continuously wound so that said continuous tube advances toward a free end of said mandrel means,

said severing step including providing cutter means including blade means rotatably mounted in said mandrel means, and cyclically operating said cutter means so that said blade means internally cut said tube of material at the free end of said mandrel means to provide said shrinkable tubular bands.

7. The method of claim 6, including cyclically reciprocably moving said blade means inwardly and outwardly of said mandrel means, and moving said blade means axially of said mandrel means in the direction of advancement of said tube during cutting of said tube by said blade means.

8. The method of claim 1, including forming a cup-like container from each said tubular band by forming an upstanding sidewall portion of said container from each said tubular band, said sidewall portion having an upper free edge portion defining a mouth of the container, and forming a bottom end panel portion of said container joined to said sidewall portion at the lower extent thereof.

9. The method of claim 8, wherein said end panel forming step includes heating and compressing the lower extent of each said tubular band so that said end panel portion is unitary with said sidewall portion.

10. The method of claim 8, wherein said step of forming said end panel portion includes positioning a separate piece of material generally in association with the lower extent of each said tubular band, and joining said separate piece of material to said tubular band generally at the lower extend thereof.

-77-

11. A method of providing tamper-evident seals on an array of containers, each having a closure, comprising

providing a spiral wound plastic shrinkable tube formed from a strip oriented primarily in the direction of its length and shrinkable primarily in the direction of its length and being wound and joined along its edges, said tube being shrinkable primarily in the radial direction,

severing a tubular length from said tube to provide a tubular band,

applying said tubular band to a container to surround the closure and an adjacent portion of the container,

shrinking said band to embrace said closure and grip said adjacent container portion,

and repeating the severing, applying and shrinking steps continuously, thereby continuously to seal an array of containers.

12. The method of claim 11, wherein said applying step includes moving said containers on conveyor means, and providing transfer means in association with said conveyor means, releasably retaining said tubular band in said transfer means at an acute angle to the direction of movement of said containers with vacuum means, and transferring said tubular band from said transfer means to a respective one of said containers by positioning said band for engagement by said one of said moving containers so that said one container moves said tubular band from said transfer means.

13. The method of claim 11, wherein said applying step includes positioning said tubular band in association with a respective one of said containers, and supporting said tubular band in a

-78-

predetermined position with respect to said one container on cooled support rail means during at least a portion of said shrinking step.

14. An apparatus for making spirally-wound, heat-shrinkable tubular bands, comprising:

means for supplying an elongated continuous strip of plastic material oriented and shrinkable primarily in the direction of its length;

cylindrical forming mandrel means upon which said strip is adapted to be wound for forming a continuous spirally-wound tube from said strip, said tube being shrinkable primarily in the radial direction;

means for spirally winding said strip on said forming mandrel means to form said tube and to advance said tube toward a free end of said mandrel means;

cutter means rotatably mounted in said mandrel means; and

means for rotating said cutter means within said mandrel means;

said cutter means including blade means adapted to reciprocably move outwardly and inwardly of said forming mandrel means at a free end thereof, whereby when said blade means moves outwardly of said mandrel means said tube of material is internally cut by said blade means.

15. The apparatus of claim 14, including means for moving said blade means axially of said forming mandrel means in the direction of advancement of said tube during cutting of said tube of material by said blade means.

16. A method of applying a generally cylindrical, heat-shrinkable member to a container, comprising the steps of:

providing preforming mandrel means at least partially configured like said container;

positioning said heat-shrinkable member in association with said preforming mandrel means;

heating said heat-shrinkable member so that it conforms to said preforming mandrel means to form a preformed member from said heat-shrinkable member, said preformed member being at least partially configured like said container;

moving said preformed member from association with said preforming mandrel means and positioning said preformed member in association with said container; and

applying said preformed member to said container by heating said preformed member so that it shrinks and further conforms to the configuration of said container.

17. The method of claim 16, including providing said preforming mandrel means with air passage means to accommodate passage of air from between said heat-shrinkable member and said preforming mandrel means.

18. The method of claim 16, including releasably retaining an annular edge portion of said heat-shrinkable member during heating thereof to form said preformed member.

19. The method of claim 16, wherein said heating during said applying step includes locally heating a portion of said preformed member for heat-shrinking said locally heated portion.

20. The method of claim 19, wherein said applying step further includes moving said locally heated portion of said preformed member with engagement means for further conforming said

-80-

preformed member to the configuration of said container.

21. A method of claim 20, wherein said applying step further includes rotating said preformed member and said container with respect to said engagement means during engagement of said engagement means with said locally heated portion.

22. An apparatus for cutting a tube of material into segments, comprising:

mandrel means upon which said tube of material is formed so that said tube is relatively axially advanced along said mandrel means;

cutter means rotatably mounted within said mandrel means including blade means adapted for reciprocable movement inwardly and outwardly of said mandrel means at a free end thereof;

means for rotating said cutter means within said mandrel means; and

means for cyclically operating said cutter means so that said blade means internally cuts said tube of material into said segments.

23. The apparatus of claim 22, wherein said operating means includes means for moving said blade means axially of said mandrel means in the direction of advancement of said tube during cutting of said tube of material.

24. The apparatus of claim 22, wherein said cutter means comprises cutter arbor means rotatably mounted in said mandrel means, and blade actuating means disposed within said cutter arbor, said blade means being operatively connected with said blade actuating means,

said blade means including a cutting portion adapted for reciprocable movement inwardly and outwardly of said mandrel means attendant to

-81-

relative axial movement of said blade actuating means and said cutter arbor means.

25. The apparatus of claim 24, wherein said cutter arbor means is mounted for reciprocable axial movement relative to said mandrel means,

said operating means including cam means for first relatively axially moving said blade actuating means and said cutter arbor means for moving the cutting portion of said blade means outwardly of said mandrel means, said cam means thereafter moving said blade actuating means and said cutter arbor means together axially relative to said mandrel means in the direction of tube advancement so that the cutting portion of said blade means moves axially with respect to said mandrel means in the direction of tube advancement during cutting of said tube of material.

26. The apparatus of claim 25, wherein said blade means comprises at least one flexible blade having one end connected to said blade actuating means, the other end of which provides said cutting portion,

said cutter arbor means including means for guiding said flexible blade so that relative axial movement of said blade actuating means and said cutter arbor means is adapted to move said cutting portion inwardly and outwardly of said mandrel means.

27. A method of cutting a tube of material into segments, comprising the steps of:

forming a tube of material on mandrel means so that said tube relatively advances along said mandrel means toward a free end thereof;

providing cutter means rotatably mounted in said mandrel means including blade means

-82-

reciprocably movable inwardly and outwardly of said mandrel means at said free end thereof;

rotating said cutter means;

operating said cutter means so that said blade means intermittently internally cuts said tube of material into said segments; and

axially moving said blade means with respect to said mandrel means in the direction of advancement of said tube of material during cutting of said tube by said blade means.

28. An apparatus for continuously applying annular-shaped heat-shrinkable members to containers, comprising:

conveyor means for carrying and moving said containers;

feed magazine means positioned in association with said conveyor means for holding a quantity of said members;

transfer means positioned above said conveyor means for transferring said members from said feed magazine means into respective association with said containers, said transfer means including vacuum means adapted to receive said members from said feed magazine means for releasably retaining each said member such that each said member is moved from said transfer means by engagement by its respective container as said containers are moved on said conveyor means past said transfer means; and

means for heating said members for shrinking said members into conformance with said containers.

29. The apparatus of claim 28, wherein said vacuum means includes vacuum plenum means adapted to apply suction to the transversely opposite outer sides of each said member for releasably retaining each said member at an acute angle with respect to the direction of movement of said containers on said conveyor means.

30. The apparatus of claim 29, said transfer means further including stop means positioned adjacent said vacuum means for further releasably retaining each said member, said stop means comprising a pair of spaced apart stops adapted to releasably engage each said member received by said vacuum means, said stops being spaced apart a distance less than the transverse dimension of each said member.

31. The apparatus of claim 30, including means for positioning said members with respect to said containers after each said member has been transferred to the respective one of said containers, said positioning means comprising a pair of cooled support rails disposed on respective opposite sides of said conveyor means, said support rails being adapted to slidably support each said member in a predetermined position with respect to its respective container as said members and said containers are moved with respect to said support rails by said conveyor means.

32. The apparatus of claim 31, wherein said heating means comprises a heat tunnel through which said containers and said members are moved by said conveyor means, said support rails extending along respective sides of said conveyor means generally from the position of said transfer means into said heat tunnel,

said apparatus including means for rotating said containers during movement thereof through said heat tunnel.

33. A method of applying heat-shrinkable members to containers, comprising the steps of:

-84-

providing feed magazine means for holding a quantity of said members;

moving said containers on conveyor means positioned in association with said feed magazine means;

transferring each said member from said magazine means into respective association with one of said containers with transfer means by applying suction to opposite sides of each said member for releasably retaining each said member at an acute angle to the direction of movement of said containers for engagement by its respective container so that said containers respectively move said members from said transfer means as said containers are moved with respect to said transfer means; and

heating said members for heat-shrinking said members into conformance with said containers.

34. The method of claim 33, including supporting each said member in a predetermined position with respect to its respective container after transfer thereto with cooled support rail means positioned in association with said conveyor means.

35. A method of applying heat-shrinkable members to containers, comprising the steps of:

moving said containers on conveyor means;

transferring said members from magazine means holding a quantity of said members into respective association with said moving containers;

supporting said members in a predetermined position with respect to said containers with support rail means after transfer of said members into respective association with said containers; and

heating said members for heat-shrinking said members into conformance with said containers.

36. The method of claim 35, wherein said heating step comprises moving said containers and said respectively associated members on said conveyor means through heat tunnel means,

said supporting step including slidably supporting said members on said support rail means as said members are moved into said heat tunnel means by movement of said containers on said conveyor means, and

cooling said support rail means by circulating coolant therethrough.

37. A cup-like container, comprising:

an upstanding sidewall portion having a relatively enlarged bead portion at the upper free edge thereof defining a mouth of said container, said sidewall portion having a downwardly, inwardly tapering configuration; and

a bottom end panel portion joined to said sidewall portion at the lower extent thereof,

said sidewall portion being formed from and comprising a tubular length of spirally-wound, heat-shrinkable plastic material which is predominantly heat-shrinkable in a radial direction with respect to the vertical axis of said container.

38. The container of claim 37, wherein said end panel portion is formed from and comprises the lower extent of said tubular length of spirally-wound heat-shrinkable material formed to extend inwardly of said sidewall portion so that said end panel portion is unitary with said sidewall portion.

39. The container of claim 38, wherein said end panel portion comprises a separate piece of plastic material joined to said tubular length of spirally-wound heat-shrinkable material generally at the lower extent thereof during formation of said container such that the lower extent of said tubular length underlies at least the peripheral portion of said separate piece of plastic material.

FIG. 1

FIG. 2

FIG. 3

FIG. 4

Fig.5.

$H_B$

Fig.6.

$P_B$

$L_B$

$20_B$

Fig.7.

22

$21_B$

$H_B$

$23_B$

$22_B$

$20_B$

$L_B$

$24_B$

Fig.8.

Fig.9.

12_B

10_B

14_B

P_B

30_B

92_B

Fig.10.

12_B

L_B

P_B

14_B

10_B

30_B

92_B

Fig.11.

34_B

L_B

12_B

10_B

36_B

30_B

P_B

Fig.12.

34_B

L_B

12_B

10_B

L_B

36_B

30_B

P_B

38_B

34_B

L_B

10_B

L_B

P_B

30_B

Fig.13.

Fig.14.

L_B

10_B

12_B

P_B

14_B

32_B

30_B

Fig. 15.

Fig. 16.

0111925

Fig. 17.

Fig. 18.

Fig. 19.

0111925

Fig. 20.

Fig. 21.

0111925

Fig. 22.

Fig. 23.

Fig. 24.

Fig. 25.

Fig. 26.    Fig. 29.

Fig. 27.    Fig. 30.

Fig. 28.    Fig. 31.